# EUROPEAN PATENT APPLICATION

(11) **EP 4 614 452 A1**
(43) Date of publication of application: **10.09.2025**
(21) Application number: 23903931.6
(22) Date of filing: 11.12.2023
(51) Int. Cl.: G06T 19/20, G06T 19/00, G06T 7/11, G06V 20/20, G06F 3/14, G06F 1/16, G02B 27/01

(54) **ELECTRONIC DEVICE, METHOD, AND COMPUTER-READABLE STORAGE MEDIUM FOR DISPLAYING VISUAL OBJECTS INCLUDED IN THRESHOLD DISTANCE**

(30) Priority: 12.12.2022 KR 20220172750; 26.12.2022 KR 20220184803
(71) Applicant: Samsung Electronics Co., Ltd., Suwon-si, Gyeonggi-do 16677 (KR)
(72) Inventor: LEE, Eunbin, Suwon-si Gyeonggi-do 16677 (KR); PARK, Eunyoung, Suwon-si Gyeonggi-do 16677 (KR)
(74) Representative: Walaski, Jan Filip
(86) International application number: PCT/KR2023/020339
(87) International publication number: WO 2024/128728

(57) **Abstract**

A wearable device according to an embodiment may display, on a display, visual objects corresponding to external objects included in an image, in a first state of displaying the image of a camera. In the first stage, the wearable device may display, on the display, at least a portion of a virtual space, in response to an input for switching to a second state of providing virtual reality. In the second state, the wearable device may maintain displaying of a first visual object corresponding to a first external object, from among the visual objects, on the basis of identifying the first external object spaced apart from the wearable device by less than a threshold distance, from among the external objects. The present document may relate to a metaverse service for strengthening the interconnectivity between a real object and a virtual object. For example, the metaverse service may be provided through a network based on fifth generation (5G) and/or sixth generation (6G).

## Description

### [Technical Field]

The present disclosure relates to an electronic device, a method, and a computer-readable storage medium for displaying visual objects included in a threshold distance.

### [Background Art]

In order to provide an enhanced user experience, an electronic device that provides an augmented reality (AR) service displaying information generated by a computer in connection with an external object in the real-world is being developed. The electronic device may be a wearable device that may be worn by a user. For example, the electronic device may be AR glasses and/or a head-mounted device (HMD).

### [Disclosure]

### [Technical Solution]

According to an embodiment, a wearable device may comprise a camera, a display, memory storing instructions, and a processor. The instructions, when executed by the processor, may cause the wearable device to, in a first state for displaying an image of the camera, identify types and positions of external objects included in the image. The instructions, when executed by the processor, may cause the wearable device to, in the first state for displaying the image of the camera, display, on the display, an image in which visual objects set to the types are arranged with respect to the external objects. The instructions, when executed by the processor, may cause the wearable device to, in the first state for displaying the image of the camera, display, identify an input for changing to a second state for providing a visual reality. The instructions, when executed by the processor, may cause the wearable device to, in the second state for displaying, on the display, at least a portion of a virtual space, changed from the first state in response to the input, maintain display of a first visual object from corresponding to a first external object from among the visual objects, based on identifying the first external object which is spaced apart below a threshold distance from the wearable device from among the external objects.

According to an embodiment, in a method of a wearable device, the method may comprise, in a first state for displaying an image of a camera, identifying types and positions of external objects included in the image. The method may comprise displaying, on a display, an image in which visual objects set to the types are arranged with respect to the external objects. The method may comprise identifying an input for changing to a second state for providing a visual reality. The method may comprise, in the second state for displaying, on the display, at least a portion of a virtual space, changed from the first state in response to the input, maintaining display of a first visual object corresponding to a first external object from among the visual objects, based on identifying the first external object which is spaced apart below a threshold distance from the wearable device from among the external objects.

According to an embodiment, in a computer readable storage medium storing one or more programs, the one or more programs, when executed by a processor of a wearable device, may cause the wearable device to, in a first state for displaying an image of a camera, identify types and positions of external objects included in the image. The one or more programs, when executed by the processor of the wearable device, may cause the wearable device to display, on a display, an image in which visual objects set to the types are arranged with respect to the external objects. The one or more programs, when executed by the processor of the wearable device, may cause the wearable device to identify an input for changing to a second state for providing a visual reality. The one or more programs, when executed by the processor of the wearable device, may cause the wearable device to, in the second state for displaying, on the display, at least a portion of a virtual space, changed from the first state in response to the input, maintain display of a first visual object corresponding to a first external object from among the visual objects, based on identifying the first external object which is spaced apart below a threshold distance from the wearable device from among the external objects in the second state.

### [Description of the Drawings]

FIG. 1 illustrates an exemplary state in which a wearable device according to an embodiment displays a visual object corresponding to an external object.
FIG. 2A illustrates an example of a perspective view of a wearable device according to an embodiment.
FIG. 2B illustrates an example of one or more hardware disposed in a wearable device according to an embodiment.
FIGS. 3A to 3B illustrate an example of an appearance of a wearable device according to an embodiment.
FIG. 4 illustrates an example of a block diagram of a wearable device according to an embodiment.
FIG. 5 illustrates an example of an operation in which a wearable device according to an embodiment displays a visual object corresponding to an external object in a first state.
FIGS. 6A, 6B, 6C, and 6D illustrate an example of an operation in which a wearable device according to an embodiment displays a visual object in a second state.
FIG. 7 illustrates an example of an operation based on execution of at least one application of a wearable device according to an embodiment, in a first state.
FIG. 8 illustrates an example of an operation in which a wearable device according to an embodiment, in a second state, displays a visual object based on a category of the visual object.
FIG. 9 illustrates an exemplary flowchart illustrating an operation of a wearable device according to an embodiment.
FIG. 10 is an exemplary diagram for a network environment in which a metaverse service is provided through a server.

### [Mode for Invention]

Hereinafter, various embodiments of the present document will be described with reference to the accompanying drawings.

The various embodiments of the present document and terms used herein are not intended to limit the technology described in the present document to specific embodiments, and should be understood to include various modifications, equivalents, or substitutes of the corresponding embodiment. In relation to the description of the drawings, a reference numeral may be used for a similar component. A singular expression may include a plural expression unless it is clearly meant differently in the context. In the present document, an expression such as "A or B", "at least one of A and/or B", "A, B or C", or "at least one of A, B and/or C", and the like may include all possible combinations of items listed together. Expressions such as "1st", "2nd", "first" or "second", and the like may modify the corresponding components regardless of order or importance, is only used to distinguish one component from another component, but does not limit the corresponding components. When a (e.g., first) component is referred to as "connected (functionally or communicatively)" or "accessed" to another (e.g., second) component, the component may be directly connected to the other component or may be connected through another component (e.g., a third component).

The term "module" used in the present document may include a unit configured with hardware, software, or firmware, and may be used interchangeably with terms such as logic, logic block, component, or circuit, and the like. The module may be an integrally configured component or a minimum unit or part thereof that performs one or more functions. For example, a module may be configured with an application-specific integrated circuit (ASIC).

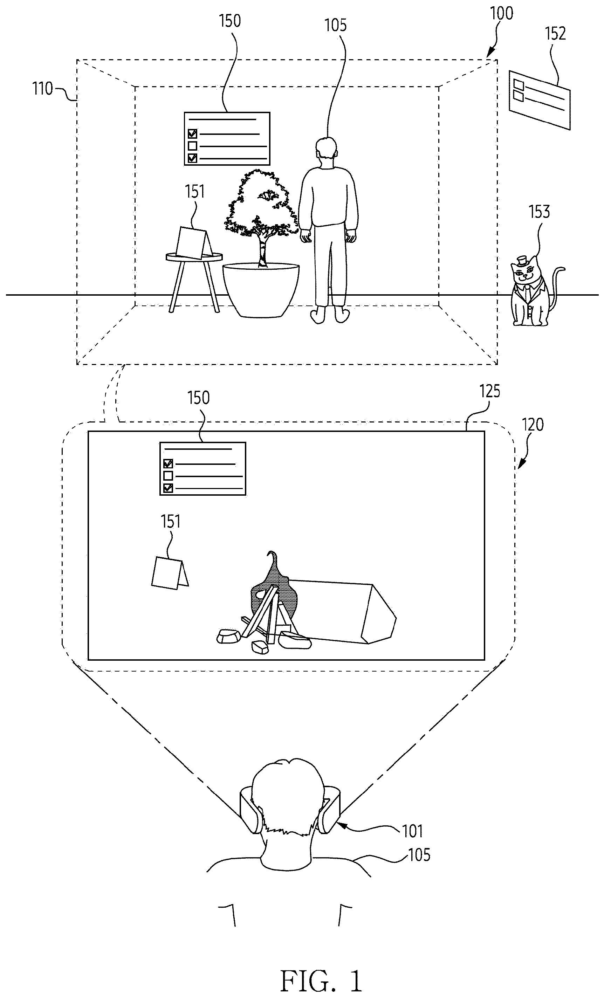

FIG. 1 illustrates an exemplary state in which a wearable device according to an embodiment displays a visual object corresponding to an external object. A wearable device 101 of FIG. 1 may include a head-mounted display (HMD) wearable on a head of a user 105. According to an embodiment, the wearable device 101 may include a camera disposed to face a front of the user 105 in a state of being worn by the user 105. The front of the user 105 may include a direction in which the head of the user 105 and/or two eyes included in the head face. According to an embodiment, the wearable device 101 may include a sensor for identifying the head of the user 105 and/or a motion of the wearable device 101 in a state of being worn by the user 105. The wearable device 101 may identify an angle of the wearable device 101 based on data of the sensor. In order to provide a user interface (UI) based on a virtual reality (VR), an augmented reality (AR), and/or a mixed reality (MR) to the user 105 wearing the wearable device 101, the wearable device 101 may control the camera and/or the sensor. The UI may be associated with the wearable device 101 and/or a metaverse service and/or a notification service provided by a server connected to the wearable device 101.

According to an embodiment, the wearable device 101 may execute a function associated with an augmented reality (AR) and/or a mixed reality (MR). Referring to FIG. 1, in a state in which the user 105 is wearing the wearable device 101, the wearable device 101 may include at least one lens disposed adjacent to an eye of the user 105. The wearable device 101 may couple ambient light passing through a lens with light emitted from a display of the wearable device 101. A display area of the display may be formed in the lens through which the ambient light passes. Since the wearable device 101 couples the ambient light and the light emitted from the display, the user 105 may view an image in which a real object recognized by the ambient light and a virtual object formed by the light emitted from the display are mixed.

According to an embodiment, the wearable device 101 may execute a function associated with a video see-through (VST) and/or a virtual reality (VR). In a state in which the user 105 is wearing the wearable device 101, the wearable device 101 may include a housing covering the eye of the user 105. The wearable device 101 may include a display disposed on a first surface facing the eye in the state. The wearable device 101 may include the camera disposed on a second surface opposite to the first surface. The wearable device 101 may obtain frames including ambient light using the camera. The wearable device 101 may cause the user 105 to recognize the ambient light through the display by outputting the frames to the display disposed on the first surface. A display area of the display disposed on the first surface may be formed by one or more pixels included in the display. The wearable device 101 may cause the user 105 to recognize the virtual object together with a real object recognized by ambient light by synthesizing the virtual object in the frames outputted through the display.

According to an embodiment, the wearable device 101 may provide a user experience based on a mixed reality (MR) using a virtual space. The wearable device 101 may generate a virtual space mapped to an external space by recognizing the external space including the wearable device 101. The wearable device 101 recognizing the external space may include an operation of obtaining information on a size (e.g., a size of the external space distinguished by a side wall, a floor surface, and/or a ceiling surface) of the external space. The wearable device 101 recognizing the external space may include an operation of identifying an external plane (e.g., a ceiling, and/or a floor) included in the external space. The external plane may be an example of a plane parallel to a reference plane (e.g., a horizontal plane). An operation of identifying the external space by the wearable device 101 may include an operation of identifying a position of the external plane in the external space. The operation of identifying the external space by the wearable device 101 may include an operation of identifying a size (e.g., a width, a height, an altitude, and/or a length) of the external plane. The operation of identifying the external space by the wearable device 101 may include an operation of identifying a virtual object (e.g., a user interface (UI) or a panel for displaying at least one image) displayed in the display.

Referring to FIG. 1, a state 100 in which the wearable device 101 according to an embodiment provides a function associated with an augmented reality is illustrated. For example, the state 100 may include a portion of a reality space in which the wearable device 101 is positioned. The wearable device 101 may overlappingly display, on the image, visual objects 150 and 151 linked to external objects included in an image, in the state 100 of displaying the image (e.g., an image indicating a real space) of a camera.

According to an embodiment, the wearable device 101 may provide the user 105 with an external object (or a real object) recognized by ambient light and a visual object (or a virtual object) displayed by the display in the state 100. The wearable device 101 may display, on the display, visual objects 150, 151, 152, and 153 corresponding to each of the external objects based on at least one application. Each of the visual objects 150, 151, 152, and 153 may correspond to each of applications stored in the wearable device 101. As an example, the applications corresponding to each of the visual objects 150, 151, 152, and 153 may be different from each other. The visual objects 150, 151, 152, and 153 may be an example of a user interface for performing at least one of functions of each of the applications. The wearable device 101 may provide the user with at least one of functions of each of the applications using the visual objects 150, 151, 152, and 153. For example, the visual objects 150, 151, 152, and 153 may include widget content.

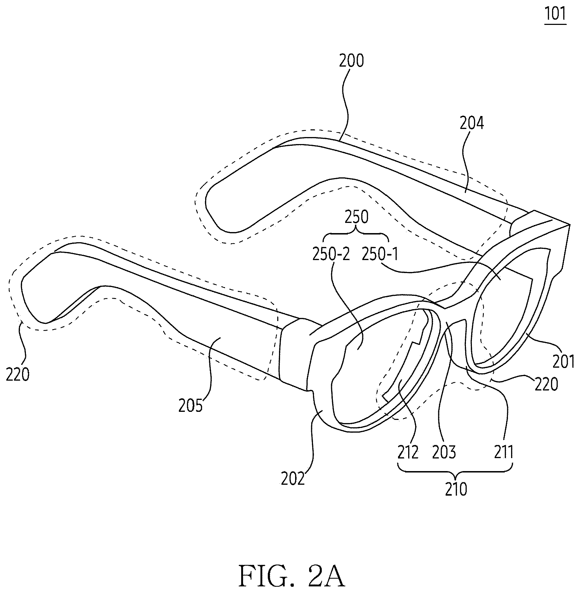

According to an embodiment, the wearable device 101 may display the visual objects 150 and 151 corresponding to each of the external objects included in the state 100. For example, the wearable device 101 may adjust positions where visual objects 150 and 151 are displayed in the display in correspondence with to positions of the external objects. For example, the wearable device 101 may display, on the display, an image in which the visual objects 150 and 151 are arranged with respect to the external objects based on the positions of the external objects. The wearable device 101 may display the visual object 150 in correspondence with to at least one plane (e.g., a wall side). The wearable device 101 may display the visual object 151 in correspondence with to an external object (e.g., a table). For example, the wearable device 101 may obtain a distance between the wearable device 101 and the visual objects 150 and 151 by displaying the visual objects 150 and 151 in correspondence with to each of the external objects. A distance between the visual objects 150 and 151 may be referred to as a distance between the wearable device 101 and the external objects (e.g., the table, or the wall surface). For example, the wearable device 101 may identify the distance using a depth camera (e.g., a depth sensor to be described later in FIGS. 2A to 3B). The wearable device 101 may represent a depth perception for the visual objects 150 and 151 by changing sizes and/or forms of the visual objects 150 and 151 based on the distance of the external objects.

For example, the wearable device 101 may provide the user with a visual object anchored to the external object by displaying the visual object in correspondence with to the external object. However, it is not limited thereto. For example, the wearable device 101 may adjust the positions where the visual objects 152 and 153 are displayed in the display.

According to an embodiment, the wearable device 101 may display at least a portion of a virtual space in response to an input for changing from the state 100 to a state 120. For example, the wearable device 101 may generate or set an area 110 in response to the input. The wearable device 101 may generate the area 110 in response to the input of the user 105 for generating the area 110.

For example, the wearable device 101 may set a threshold distance for displaying at least a portion of the virtual space from the user 105 wearing the wearable device 101. The wearable device 101 may set a threshold distance for maintaining the state 120. The wearable device 101 may set the area 110 for maintaining the state 100 using the threshold distance. The wearable device 101 may provide the user with a virtual reality service in the area 110. For example, at least one of the visual objects 150, 151, 152, and 153 may be included in the area 110. An example in which the wearable device 101 generates the area 110 of a shape of a cuboid is illustrated, but a shape of the area 110 is not limited thereto. For example, the shape of the area 110 may include a polygon such as a triangular pyramid, a cone, and/or a sphere, or may have a shape of a closed curve. For example, the wearable device 101 may change from the state 120 to the state 100 based on identifying the wearable device 101 and/or the user 105 that are outside the area 110.

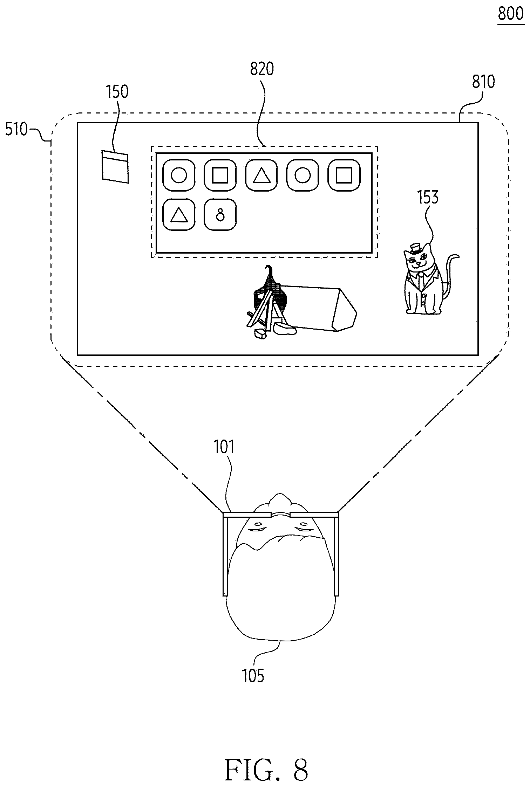

According to an embodiment, the wearable device 101 may display, in the display, a screen 125 representing at least a portion of the virtual space in the state 120. The wearable device 101 may display at least one of the visual objects 150, 151, 152, and 153 in the screen 125. For example, the wearable device 101 may display the visual objects 150 and 151 so as to overlap on the screen 125 based on identifying the visual objects 150 and 151 included in the area 110. The wearable device 101 may temporarily cease displaying the visual objects 152 and 153 on the screen 125 by controlling the display based on identifying the visual objects 152 and 153 not included in the area 110. The wearable device 101 may temporarily cease displaying the visual objects 152 and 153 based on identifying the visual objects 152 and 153 which are spaced apart greater than or equal to a threshold distance from the wearable device 101. Accordingly, displaying too many visual objects on the screen 125 may be prevented. Additionally, user inconvenience that may occur due to display of too much information may be decreased by preventing too many visual objects from being displayed on the screen 125. However, it is not limited thereto. The wearable device 101 may display at least one of the visual objects 152 and 153 so as to overlap on the screen 125 in the state 120. An operation of displaying the at least one by the wearable device 101 will be described later in FIG. 8.

As described above, according to an embodiment, the wearable device 101 may provide the user 105 with a service for providing an augmented reality (AR) and/or a virtual reality (VR). The wearable device 101 may provide the user with a variety of a metaverse environment by changing from a service (e.g., the state 100) for providing an augmented reality to a service (e.g., the state 120) for providing a virtual reality. The wearable device 101 may provide the user 105 with linked data between the service for providing the augmented reality and the service for providing the virtual reality. For example, the wearable device 101 may display at least one of the visual objects 150, 151, 152, and 153 on the display, independently of the states 100 and 120. The wearable device 101 may provide user convenience for performing an interaction with at least one of the visual objects 150, 151, 152, and 153 by displaying the at least one of the visual objects 150, 151, 152, and 153 on the display.

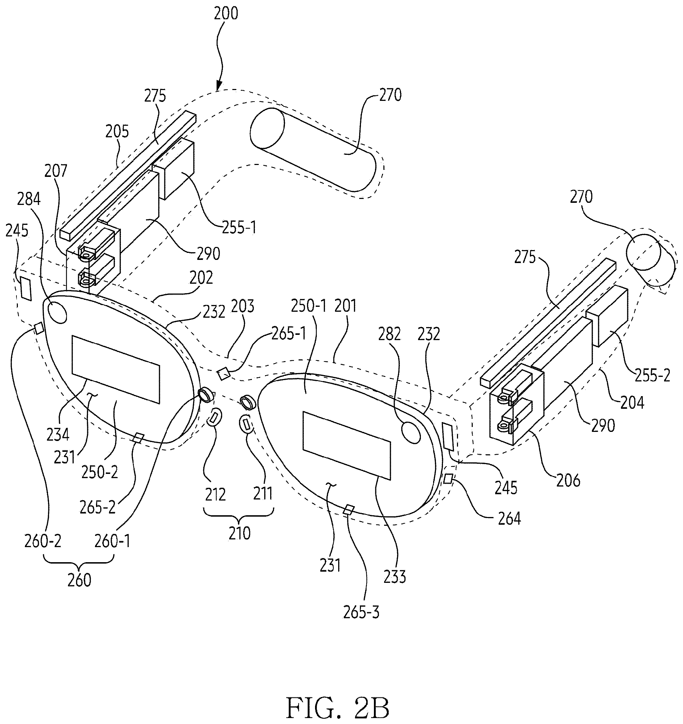

FIG. 2A illustrates an example of a perspective view of a wearable device according to an embodiment. FIG. 2B illustrates an example of one or more hardware disposed in a wearable device according to an embodiment. According to an embodiment, the wearable device 101 may have a shape of glasses wearable on a body part (e.g., head) of a user. The wearable device 101 of FIGS. 2A and 2B may be an example of the wearable device 101 of FIG. 1. The wearable device 101 may include a head-mounted display (HMD). For example, a housing of the wearable device 101 may include a flexible material, such as rubber and/or silicone, having a shape that is in close contact with a part of the user's head (e.g., a part of the face surrounding both eyes). For example, the housing of the wearable device 101 may include one or more straps able to be twined around the user's head and/or one or more temples attachable to the head's ear.

Referring to FIG. 2A, according to an embodiment, the wearable device 101 may include at least one display 250 and a frame 200 supporting the at least one display 250.

According to an embodiment, the wearable device 101 may be wearable on a portion of the user's body. The wearable device 101 may provide augmented reality (AR), virtual reality (VR), or mixed reality (MR) combining the augmented reality and the virtual reality to a user wearing the wearable device 101. For example, the wearable device 101 may display a virtual reality image provided from at least one optical device 282 and 284 of FIG. 2B on at least one display 250, in response to a user's preset gesture obtained through a motion recognition camera 260-2 and 264 of FIG. 2B.

According to an embodiment, the at least one display 250 may provide visual information to a user. For example, the at least one display 250 may include a transparent or translucent lens. The at least one display 250 may include a first display 250-1 and/or a second display 250-2 spaced apart from the first display 250-1. For example, the first display 250-1 and the second display 250-2 may be disposed at positions corresponding to the user's left and right eyes, respectively.

Referring to FIG. 2B, in an embodiment, the at least one display 250 may provide visual information transmitted through a lens included in the at least one display 250 from ambient light to a user and other visual information distinguished from the visual information2. The lens may be formed based on at least one of a fresnel lens, a pancake lens, or a multi-channel lens. For example, the at least one display 250 may include a first surface 231 and a second surface 232 opposite to the first surface 231. A display area may be formed on the second surface 232 of at least one display 250. When the user wears the wearable device 101, ambient light may be transmitted to the user by being incident on the first surface 231 and being penetrated through the second surface 232. For another example, the at least one display 250 may display an augmented reality image in which a virtual reality image provided by the at least one optical device 282 and 284 is combined with a reality screen transmitted through ambient light, on a display area formed on the second surface 232.

According to an embodiment, the at least one display 250 may include at least one waveguide 233 and 234 that transmits light transmitted from the at least one optical device 282 and 284 by diffracting to the user. The at least one waveguide 233 and 234 may be formed based on at least one of glass, plastic, or polymer. A nano pattern may be formed on at least a portion of the outside or inside of the at least one waveguide 233 and 234. The nano pattern may be formed based on a grating structure having a polygonal or curved shape. Light incident to an end of the at least one waveguide 233 and 234 may be propagated to another end of the at least one waveguide 233 and 234 by the nano pattern. The at least one waveguide 233 and 234 may include at least one of at least one diffraction element (e.g., a diffractive optical element (DOE), a holographic optical element (HOE)), and a reflection element (e.g., a reflection mirror). For example, the at least one waveguide 233 and 234 may be disposed in the wearable device 101 to guide a screen displayed by the at least one display 250 to the user's eyes. For example, the screen may be transmitted to the user's eyes based on total internal reflection (TIR) generated in the at least one waveguide 233 and 234.

According to an embodiment, the wearable device 101 may analyze an object included in a real image collected through a photographing camera 245, combine with a virtual object corresponding to an object that become a subject of augmented reality provision among the analyzed object, and display on the at least one display 250. The virtual object may include at least one of text and images for various information associated with the object included in the real image. The wearable device 101 may analyze the object based on a multi-camera such as a stereo camera. For the object analysis, the wearable device 101 may execute simultaneous localization and mapping (SLAM) and/or time-of-flight (ToF), supported by the multi-camera. The user wearing the wearable device 101 may watch an image displayed on the at least one display 250.

According to an embodiment, a frame 200 may be configured with a physical structure in which the wearable device 101 may be worn on the user's body. According to an embodiment, the frame 200 may be configured so that when the user wears the wearable device 101, the first display 250-1 and the second display 250-2 may be positioned corresponding to the user's left and right eyes. The frame 200 may support the at least one display 250. For example, the frame 200 may support the first display 250-1 and the second display 250-2 to be positioned at positions corresponding to the user's left and right eyes.

Referring to FIG. 2A, according to an embodiment, the frame 200 may include an area 220 at least partially in contact with the portion of the user's body in case that the user wears the wearable device 101. For example, the area 220 of the frame 200 in contact with the portion of the user's body may include an area in contact with a portion of the user's nose, a portion of the user's ear, and a portion of the side of the user's face that the wearable device 101 contacts. According to an embodiment, the frame 200 may include a nose pad 210 that is contacted on the portion of the user's body. When the wearable device 101 is worn by the user, the nose pad 210 may be contacted on the portion of the user's nose. The frame 200 may include a first temple 204 and a second temple 205, which are contacted on another portion of the user's body that is distinct from the portion of the user's body.

For example, the frame 200 may include a first rim 201 surrounding at least a portion of the first display 250-1, a second rim 202 surrounding at least a portion of the second display 250-2, a bridge 203 disposed between the first rim 201 and the second rim 202, a first pad 211 disposed along a portion of the edge of the first rim 201 from one end of the bridge 203, a second pad 212 disposed along a portion of the edge of the second rim 202 from the other end of the bridge 203, the first temple 204 extending from the first rim 201 and fixed to a portion of the wearer's ear, and the second temple 205 extending from the second rim 202 and fixed to a portion of the ear opposite to the ear. The first pad 211 and the second pad 212 may be in contact with the portion of the user's nose, and the first temple 204 and the second temple 205 may be in contact with a portion of the user's face and the portion of the user's ear. The temples 204 and 205 may be rotatably connected to the rim through hinge units 206 and 207 of FIG. 2B. The first temple 204 may be rotatably connected with respect to the first rim 201 through the first hinge unit 206 disposed between the first rim 201 and the first temple 204. The second temple 205 may be rotatably connected with respect to the second rim 202 through the second hinge unit 207 disposed between the second rim 202 and the second temple 205. According to an embodiment, the wearable device 101 may identify an external object (e.g., a user's fingertip) touching the frame 200 and/or a gesture performed by the external object by using a touch sensor, a grip sensor, and/or a proximity sensor formed on at least a portion of the surface of the frame 200.

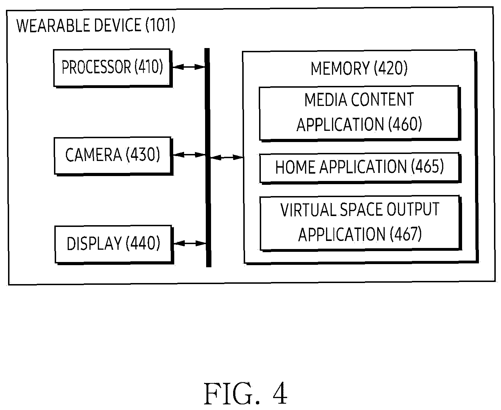

According to an embodiment, the wearable device 101 may include hardware (e.g., hardware to be described later based on the block diagram of FIG. 4) that performs various functions. For example, the hardware may include a battery module 270, an antenna module 275, the at least one optical device 282 and 284, speakers (e.g., speakers 255-1 and 255-2), a microphone (e.g., microphones 265-1, 265-2, and 265-3), a light emitting module (not illustrated), and/or a printed circuit board (PCB) 290 (e.g., printed circuit board). Various hardware may be disposed in the frame 200.

According to an embodiment, the microphone (e.g., the microphones 265-1, 265-2, and 265-3) of the wearable device 101 may obtain a sound signal, by being disposed on at least a portion of the frame 200. The first microphone 265-1 disposed on the nose pad 210, the second microphone 265-2 disposed on the second rim 202, and the third microphone 265-3 disposed on the first rim 201 are illustrated in FIG. 2B, but the number and disposition of the microphone 265 are not limited to an embodiment of FIG. 2B. In case that the number of the microphone 265 included in the wearable device 101 is two or more, the wearable device 101 may identify a direction of the sound signal by using a plurality of microphones disposed on different portions of the frame 200.

According to an embodiment, the at least one optical device 282 and 284 may project a virtual object on the at least one display 250 in order to provide various image information to the user. For example, the at least one optical device 282 and 284 may be a projector. The at least one optical device 282 and 284 may be disposed adjacent to the at least one display 250 or may be included in the at least one display 250 as a portion of the at least one display 250. According to an embodiment, the wearable device 101 may include a first optical device 282 corresponding to the first display 250-1, and a second optical device 284 corresponding to the second display 250-2. For example, the at least one optical device 282 and 284 may include the first optical device 282 disposed at a periphery of the first display 250-1 and the second optical device 284 disposed at a periphery of the second display 250-2. The first optical device 282 may transmit light to the first waveguide 233 disposed on the first display 250-1, and the second optical device 284 may transmit light to the second waveguide 234 disposed on the second display 250-2.

In an embodiment, a camera 260 may include the photographing camera 245, an eye tracking camera (ET CAM) 260-1, and/or the motion recognition camera 260-2. The photographing camera 245, the eye tracking camera 260-1, and the motion recognition camera 260-2 may be disposed at different positions on the frame 200 and may perform different functions. The eye tracking camera 260-1 may output data indicating a gaze of the user wearing the wearable device 101. For example, the wearable device 101 may detect the gaze from an image including the user's pupil obtained through the eye tracking camera 260-1. An example in which the eye tracking camera 260-1 is disposed toward the user's right eye is illustrated in FIG. 2B, but the embodiment is not limited thereto, and the eye tracking camera 260-1 may be disposed alone toward the user's left eye or may be disposed toward two eyes.

In an embodiment, the photographing camera 245 may photograph a real image or background to be matched with a virtual image in order to implement the augmented reality or mixed reality content. The photographing camera 245 may photograph an image of a specific object existing at a position viewed by the user and may provide the image to the at least one display 250. The at least one display 250 may display one image in which a virtual image provided through the at least one optical device 282 or 284 is overlapped with information on the real image or background including the image of the specific object obtained by using the photographing camera 245. In an embodiment, the photographing camera 245 may be disposed on the bridge 203 disposed between the first rim 201 and the second rim 202.

According to an embodiment, the eye tracking camera 260-1 may implement a more realistic augmented reality by matching the user's gaze with the visual information provided on the at least one display 250, by tracking the gaze of the user wearing the wearable device 101. For example, when the user looks at the front, the wearable device 101 may naturally display environment information associated with the user's front on the at least one display 250 at a position where the user is positioned. The eye tracking camera 260-1 may be configured to capture an image of the user's pupil in order to determine the user's gaze. For example, the eye tracking camera 260-1 may receive gaze detection light reflected from the user's pupil and may track the user's gaze based on the position and movement of the received gaze detection light. In an embodiment, the eye tracking camera 260-1 may be disposed at a position corresponding to the user's left and right eyes. For example, the eye tracking camera 260-1 may be disposed in the first rim 201 and/or the second rim 202 to face the direction in which the user wearing the wearable device 101 is positioned.

The motion recognition camera 260-2 may provide a specific event to the screen provided on the at least one display 250 by recognizing the movement of the whole or portion of the user's body, such as the user's torso, hand, or face. The motion recognition camera 260-2 may obtain a signal corresponding to motion by recognizing the user's gesture, and may provide a display corresponding to the signal to the at least one display 250. A processor may identify a signal corresponding to the operation and may perform a preset function based on the identification. In an embodiment, the motion recognition camera 260-2 may be disposed on the first rim 201 and/or the second rim 202.

According to an embodiment, the camera 260 included in the wearable device 101 is not limited to the above-described eye tracking camera 260-1 and the motion recognition camera 260-2. For example, the wearable device 101 may identify an external object included in the FoV by using a camera 260 disposed toward the user's FoV. The wearable device 101 identifying the external object may be performed based on a sensor for identifying a distance between the wearable device 101 and the external object, such as a depth sensor and/or a time of flight (ToF) sensor. The camera 260 disposed toward the FoV may support an autofocus function and/or an optical image stabilization (OIS) function. For example, in order to obtain an image including a face of the user wearing the wearable device 101, the wearable device 101 may include the camera 260 (e.g., a face tracking (FT) camera) disposed toward the face.

Although not illustrated, the wearable device 101 according to an embodiment may further include a light source (e.g., LED) that emits light toward a subject (e.g., user's eyes, face, and/or an external object in the FoV) photographed by using the camera 260. The light source may include an LED having an infrared wavelength. The light source may be disposed on at least one of the frame 200, and the hinge units 206 and 207.

According to an embodiment, the battery module 270 may supply power to electronic components of the wearable device 101. In an embodiment, the battery module 270 may be disposed in the first temple 204 and/or the second temple 205. For example, the battery module 270 may be a plurality of battery modules 270. The plurality of battery modules 270, respectively, may be disposed on each of the first temple 204 and the second temple 205. In an embodiment, the battery module 270 may be disposed at an end of the first temple 204 and/or the second temple 205.

According to an embodiment, the antenna module 275 may transmit the signal or power to the outside of the wearable device 101 or may receive the signal or power from the outside. In an embodiment, the antenna module 275 may be disposed in the first temple 204 and/or the second temple 205. For example, the antenna module 275 may be disposed close to one surface of the first temple 204 and/or the second temple 205.

According to an embodiment, the speaker 255 may output a sound signal to the outside of the wearable device 101. A sound output module may be referred to as a speaker. In an embodiment, the speaker 255 may be disposed in the first temple 204 and/or the second temple 205 in order to be disposed adjacent to the ear of the user wearing the wearable device 101. For example, the speaker 255 may include a second speaker 255-2 disposed adjacent to the user's left ear by being disposed in the first temple 204, and a first speaker 255-1 disposed adjacent to the user's right ear by being disposed in the second temple 205.

According to an embodiment, the light emitting module (not illustrated) may include at least one light emitting element. The light emitting module may emit light of a color corresponding to a specific state or may emit light through an operation corresponding to the specific state in order to visually provide information on a specific state of the wearable device 101 to the user. For example, when the wearable device 101 requires charging, it may repeatedly emit red light at a specific timing. In an embodiment, the light emitting module may be disposed on the first rim 201 and/or the second rim 202.

Referring to FIG. 2B, according to an embodiment, the wearable device 101 may include the printed circuit board (PCB) 290. The PCB 290 may be included in at least one of the first temple 204 or the second temple 205. The PCB 290 may include an interposer disposed between at least two sub PCBs. On the PCB 290, one or more hardware (e.g., hardware illustrated by blocks of FIG. 4) included in the wearable device 101 may be disposed. The wearable device 101 may include a flexible PCB (FPCB) for interconnecting the hardware.

According to an embodiment, the wearable device 101 may include at least one of a gyro sensor, a gravity sensor, and/or an acceleration sensor for detecting the posture of the wearable device 101 and/or the posture of a body part (e.g., a head) of the user wearing the wearable device 101. Each of the gravity sensor and the acceleration sensor may measure gravity acceleration, and/or acceleration based on preset 3-dimensional axes (e.g., x-axis, y-axis, and z-axis) perpendicular to each other. The gyro sensor may measure angular velocity of each of preset 3-dimensional axes (e.g., x-axis, y-axis, and z-axis). At least one of the gravity sensor, the acceleration sensor, and the gyro sensor may be referred to as an inertial measurement unit (IMU). According to an embodiment, the wearable device 101 may identify the user's motion and/or gesture performed to execute or stop a specific function of the wearable device 101 based on the IMU.

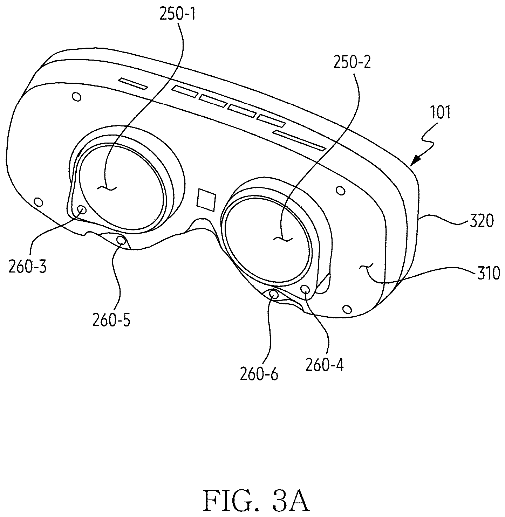

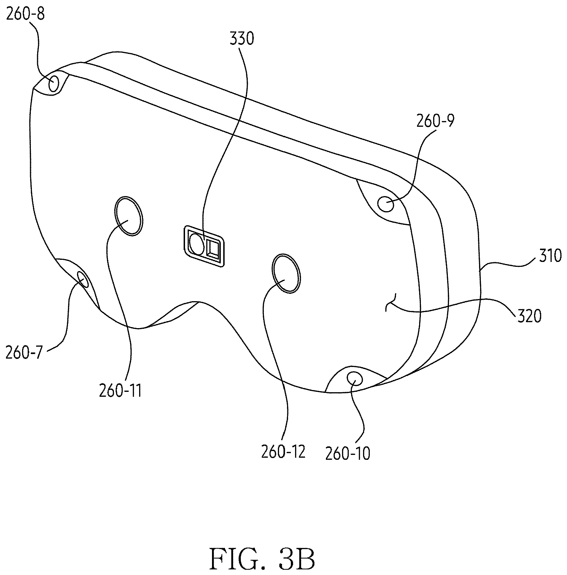

FIGS. 3A to 3B illustrate an example of an exterior of a wearable device according to an embodiment. The wearable device 101 of FIGS. 3A to 3B may be an example of the wearable device 101 of FIG. 1. According to an embodiment, an example of an exterior of a first surface 310 of a housing of the wearable device 101 may be illustrated in FIG. 3A, and an example of an exterior of a second surface 320 opposite to the first surface 310 may be illustrated in FIG. 3B.

Referring to FIG. 3A, according to an embodiment, the first surface 310 of the wearable device 101 may have an attachable shape on the user's body part (e.g., the user's face). Although not illustrated, the wearable device 101 may further include a strap for being fixed on the user's body part, and/or one or more temples (e.g., the first temple 204 and/or the second temple 205 of FIGS. 2A to 2B). A first display 250-1 for outputting an image to the left eye among the user's two eyes and a second display 250-2 for outputting an image to the right eye among the user's two eyes may be disposed on the first surface 310. The wearable device 101 may further include rubber or silicon packing, which are formed on the first surface 310, for preventing interference by light (e.g., ambient light) different from the light emitted from the first display 250-1 and the second display 250-2.

According to an embodiment, the wearable device 101 may include cameras 260-3 and 260-4 for photographing and/or tracking two eyes of the user adjacent to each of the first display 250-1 and the second display 250-2. The cameras 260-3 and 260-4 may be referred to as the ET camera. According to an embodiment, the wearable device 101 may include cameras 260-5 and 260-6 for photographing and/or recognizing the user's face. The cameras 260-5 and 260-6 may be referred to as a FT camera.

Referring to FIG. 3B, for example, a camera (e.g., cameras 260-7, 260-8, 260-9, 260-10, 260-11, and 260-12), and/or a sensor (e.g., the depth sensor 330) for obtaining information associated with the external environment of the wearable device 101 may be disposed on the second surface 320 opposite to the first surface 310 of FIG. 3A. For example, the cameras 260-7, 260-8, 260-9, and 260-10 may be disposed on the second surface 320 in order to recognize an external object (e.g., the external object 220) distinct from the wearable device 101. For example, by using cameras 260-11 and 260-12, the wearable device 101 may obtain an image and/or video to be transmitted to each of the user's two eyes. The camera 260-11 may be disposed on the second surface 320 of the wearable device 101 to obtain an image to be displayed through the second display 250-2 corresponding to the right eye among the two eyes. The camera 260-12 may be disposed on the second surface 320 of the wearable device 101 to obtain an image to be displayed through the first display 250-1 corresponding to the left eye among the two eyes.

According to an embodiment, the wearable device 101 may include the depth sensor 330 disposed on the second surface 320 in order to identify a distance between the wearable device 101 and the external object. By using the depth sensor 330, the wearable device 101 may obtain spatial information (e.g., a depth map) about at least a portion of the FoV of the user wearing the wearable device 101.

Although not illustrated, a microphone for obtaining sound outputted from the external object may be disposed on the second surface 320 of the wearable device 101. The number of microphones may be one or more according to embodiments.

As described above, according to an embodiment, the wearable device 101 may have a form factor for being worn on a head of a user. The wearable device 101 may provide a user experience based on an augmented reality, a virtual reality, and/or a mixed reality in a state of being worn on the head. Using the depth sensor 330 for identifying position information of an external object, the wearable device 101 may selectively display a visual object (e.g., the visual objects 150, 151, 152, and 153 of FIG. 1) in a user interface for providing an augmented reality, a virtual reality, and/or a mixed reality by controlling a display. The wearable device 101 may decrease an amount of data processing for rendering the visual object by selectively displaying the visual object on the display.

FIG. 4 illustrates an example of a block diagram of a wearable device according to an embodiment. A wearable device 101 of FIG. 4 may include the wearable device 101 of FIGS. 1 to 3B. The wearable device 101 may include at least one of a processor 410, memory 420, a camera 430, or a display 440. The processor 410, the memory 420, the camera 430, and the display 440 may be electronically and/or operably coupled with each other by a communication bus. Hereinafter, hardware being operably coupled may mean that a direct connection or an indirect connection between the hardware is established by wire or wirelessly, so that second hardware among the hardware is controlled by first hardware. Although illustrated based on different blocks, an embodiment is not limited thereto, and a portion (e.g., at least a portion of the processor 410, the memory 420, and communication circuitry 440) of the hardware of FIG. 4 may be included in a single integrated circuit such as a system on a chip (SoC). A type and/or the number of the hardware included in the wearable device 101 is not limited as illustrated in FIG. 4. For example, the wearable device 101 may include only some of hardware components illustrated in FIG. 4.

According to an embodiment, the processor 410 of the wearable device 101 may include hardware for processing data based on one or more instructions. The hardware for processing data may include, for example, an arithmetic and logic unit (ALU), a floating point unit (FPU), a field programmable gate array (FPGA), a central processing unit (CPU), and/or an application processor (AP). The processor 420 may have a structure of a single-core processor, or may have a structure of a multi-core processor such as a dual core, a quad core, or a hexa core.

According to an embodiment, the memory 420 of the wearable device 101 may include hardware for storing data and/or instruction inputted and/or outputted to and from the processor 410 of the wearable device 101. The memory 420 may include, for example, volatile memory such as random-access memory (RAM) and/or non-volatile memory such as read-only memory (ROM). The volatile memory may include, for example, at least one of dynamic RAM (DRAM), static RAM (SRAM), Cache RAM, and pseudo SRAM (PSRAM). For example, the non-volatile memory may include at least one of programmable ROM (PROM), erasable PROM (EPROM), electrically erasable PROM (EEPROM), flash memory, a hard disk, a compact disk, a solid state drive (SSD), and an embedded multi-media card (eMMC).

According to an embodiment, the camera 430 of the wearable device 101 may include one or more optical sensors (e.g., a charged coupled device (CCD) sensor and a complementary metal oxide semiconductor (CMOS) sensor) for generating an electrical signal indicating a color and/or brightness of light. A plurality of optical sensors included in the camera 430 may be disposed in a form of a 2 dimensional array. The camera 430 may generate a 2 dimensional frame corresponding to light reaching the optical sensors of the 2 dimensional array by substantially simultaneously obtaining electrical signals of each of the plurality of optical sensors. For example, photo data captured using the camera 430 may include one 2 dimensional frame obtained from the camera 430. For example, video data captured using the camera 430 may mean a sequence of a plurality of the 2 dimensional frames obtained from the camera 430 according to a frame rate. The camera 430 may be disposed toward a direction in which the camera 430 receives light, and may further include a flash light for outputting light toward the direction. Although the camera 430 is illustrated based on a single block, the number of the cameras 430 included in the wearable device 101 is not limited to an embodiment. For example, the wearable device 101 may include one or more cameras, such as the one or more cameras 430 of FIGS. 2A to 2B and/or 3A to 3B.

According to an embodiment, the display 440 of the wearable device 101 may output visualized information to a user. For example, the display 440 may be output the visualized information to the user by being controlled by the processor 410 and/or a graphic processing unit (GPU) (not illustrated). The display 440 may include a flat panel display (FPD) and/or electronic paper. The FPD may include a liquid crystal display (LCD), a plasma display panel (PDP), a digital mirror device (DMD), one or more light emitting diodes (LEDs), and/or a micro LED. The LED may include an organic LED (OLED). In an embodiment, transmission of light may occur in at least a portion of the display 440. The wearable device 101 may provide the user with a user experience associated with an augmented reality by providing a combination of light outputted through the display 440 and light transmitted through the display 440. As described above with reference to FIGS. 2A to 2B and/or 3A to 3B, the display 440 of the wearable device 101 according to an embodiment may have a structure for covering an entire field-of-view (FoV) of the user or emitting light toward the FoV in a state of being worn on a body part of the user such as a head. Although not illustrated, the wearable device 101 may include another output means for outputting information in another form other than a visual form and an audible form. For example, the wearable device 101 may include at least one speaker for outputting an audio signal, and/or a motor (or an actuator) for providing haptic feedback based on vibration.

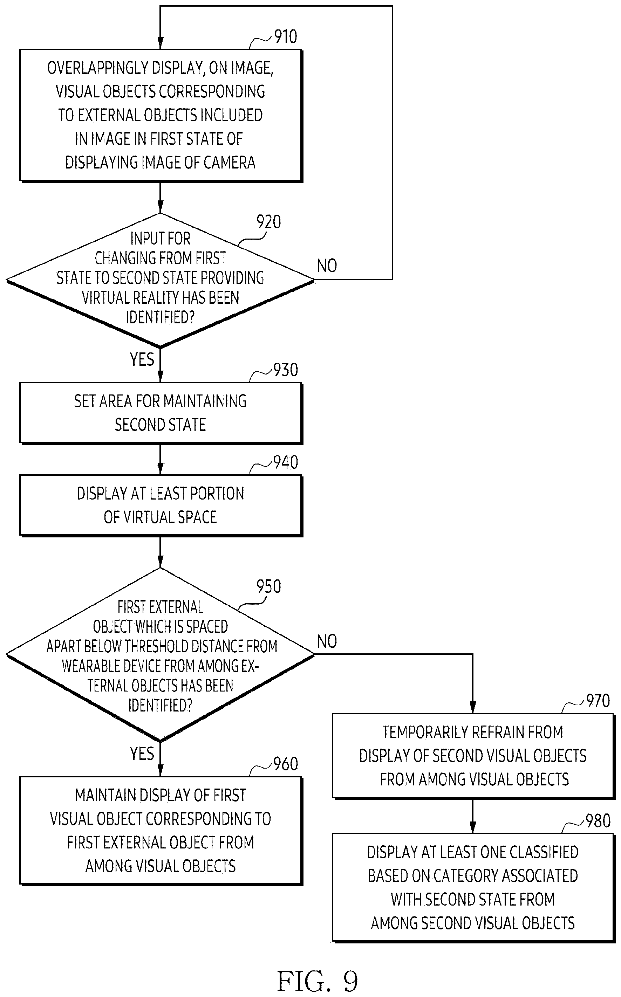

According to an embodiment, in the memory 420 of the wearable device 101, one or more instructions (or commands) indicating a calculation and/or an operation to be performed on data by the processor 410 of the wearable device 101 may be stored. A set of one or more instructions may be referred to as firmware, an operating system, a process, a routine, a sub-routine and/or an application. For example, the wearable device 101 and/or the processor 410 may perform at least one of operations of FIG. 9 when a set of a plurality of instructions distributed in a form of an operating system, firmware, a driver, and/or an application is executed. Hereinafter, an application being installed in the wearable device 101 may mean that one or more instructions provided in a form of an application are stored in the memory 420 and the one or more applications are stored in a format (e.g., a file having an extension designated by an operating system of the wearable device 101) by the processor 410. As an example, the application may include a program and/or a library associated with a service provided to the user.

According to an embodiment, the wearable device 101 may display the visual objects 150, 151, 152, and 153 of FIG. 1 in the display 440, based on execution of a media content application 460. The wearable device 101 may perform at least one of functions of the media content application 460 using the visual objects 150, 151, 152, and 153 of FIG. 1. The media content application 460 is illustrated by a single block, but may be one or more, according to the number of visual objects.

According to an embodiment, the wearable device 101 may control execution of at least one of one or more applications (e.g., the media content application 460) stored in the memory 420 based on execution of a home application 465. The home application 465 may be an example of an application for classifying the one or more applications based on a category of the one or more applications. For example, the wearable device 101 may launch at least one of the one or more applications based on the execution of the home application 465.

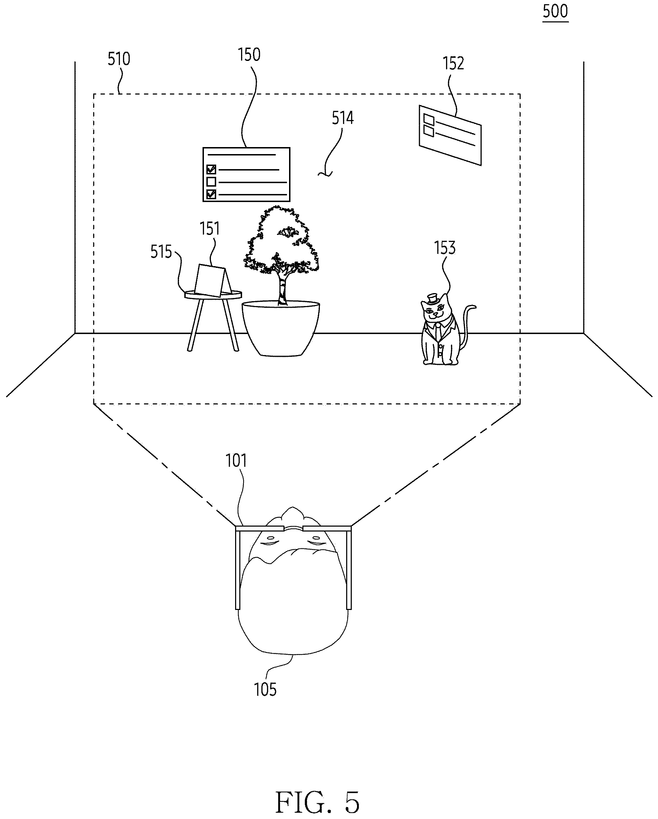

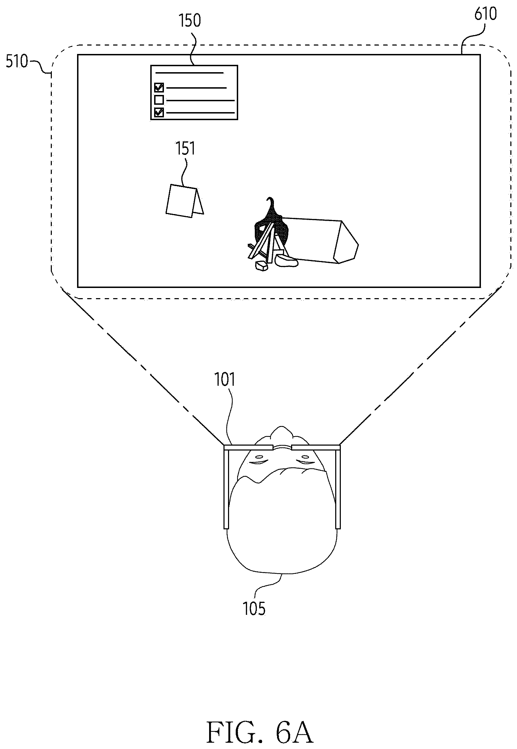

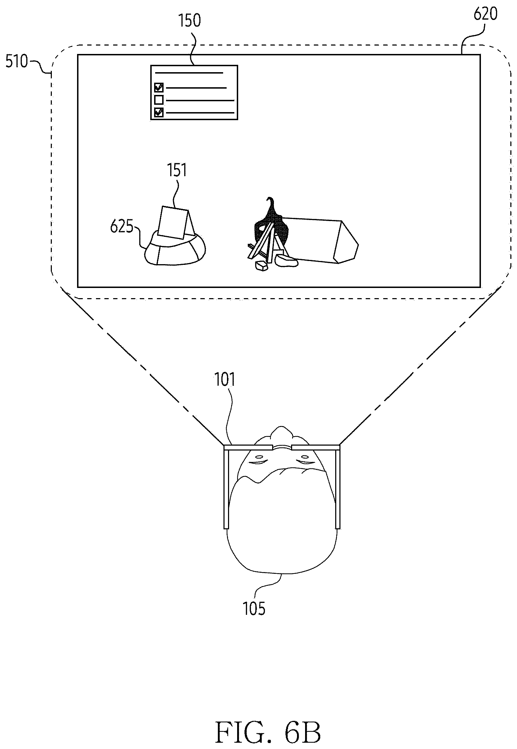

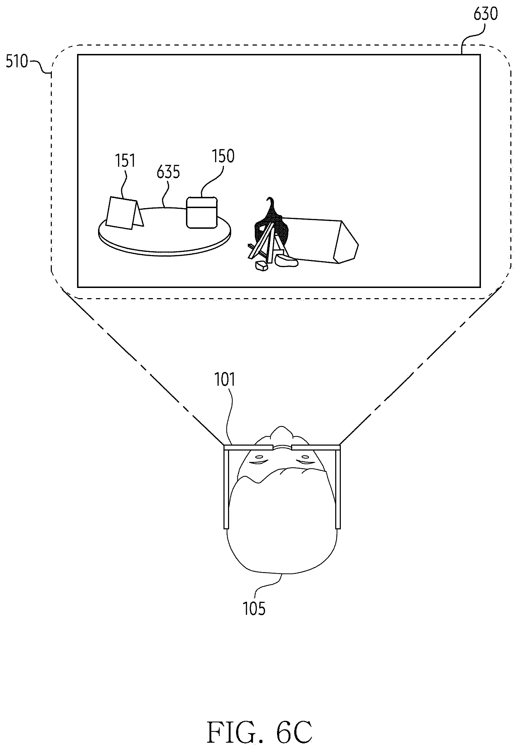

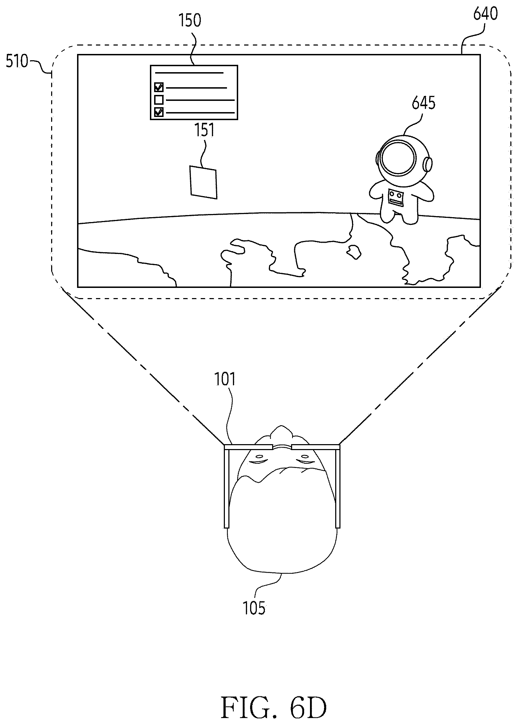

According to an embodiment, the wearable device 101 may display at least a portion of a virtual space in the display 440 based on execution of a virtual space output application 467. A state in which the wearable device 101 displays at least the portion of the virtual space in the display 440 may be referred to as the state 120 of FIG. 1. The wearable device 101 may set an area (e.g., the area 110 of FIG. 1) for maintaining the execution of the virtual space output application 467 based on the execution of the virtual space output application 467. The wearable device 101 may provide the user with the virtual space based on the execution of the virtual space output application 467 in a state in which a position of the wearable device 101 is included in the area. The wearable device 101 may display visual objects (e.g., the visual objects 150, 151, 152, and 153 of FIG. 1) provided by the media content application 460 in the display 440, in a state in which the virtual space output application 467 is executed. An example of an operation of displaying the visual objects by the wearable device 101 will be described later in FIGS. 6A, 6B, 6C, and 6D. Hereinafter, in FIG. 5, an example of an operation in which the wearable device 101 displays visual objects corresponding to external objects obtained using a camera in a display area of the display 440 will be described later.

As described above, according to an embodiment, the wearable device 101 may execute one or more programs for identifying a real space including the wearable device 101. The wearable device 101 may provide a user experience based on an augmented reality (or a virtual reality) service using the real space and/or a virtual space mapped to the real space. The wearable device 101 may provide the user with various metaverse environments by interchanging the augmented reality service and the virtual reality service. The wearable device 101 may enhance the user experience using a user interface (e.g., the visual objects 150, 151, 152, and 153 of FIG. 1) linked between the augmented reality service and the virtual reality service.

Hereinafter, in FIG. 5, an example of an operation in which the wearable device 101 displays the visual objects corresponding to the external objects obtained using the camera in the display area of the display 440 will be described later.

FIG. 5 illustrates an example of an operation in which a wearable device according to an embodiment displays a visual object corresponding to an external object in a first state. A wearable device 101 of FIG. 5 may be an example of the wearable device 101 of FIGS. 1 to 4. Referring to FIG. 5, a state 500 in which the wearable device 101 according to an embodiment displays external objects 514 and 515 and/or visual objects 150, 151, 152, and 153 in a display area 510 of a display (e.g., the display 440 of FIG. 4) is illustrated. The state 500 may be referred to as the state 100 of FIG. 1.

According to an embodiment, in the state 500, the wearable device 101 may identify the external objects 514 and 515 using a camera (e.g., the camera 430 of FIG. 4). The external objects 514 and 515 may be an example of a real object disposed in a real space including the wearable device 101. The wearable device 101 may obtain distance information on the external objects 514 and 515 using a depth camera (or a depth sensor). In an embodiment, the depth camera may be included in the camera 430. For example, the wearable device 101 may identify types of the external objects 514 and 515 based on execution of at least one application. The wearable device 101 may display visual objects corresponding to each of the external objects 514 and 515 based on identifying the types of the external objects 514 and 515. The wearable device 101 may display visual objects set for each type of the external objects 514 and 515 based on identifying the types of the external objects 514 and 515. The wearable device 101 may display visual objects set for each type of the external objects 514 and 515 to be arranged with respect to the external objects.

According to an embodiment, the wearable device 101 may display the visual objects 150, 151, 152, and 153 in the display area 510. The display area 510 may include a field-of-view (FoV) of a user 105. The wearable device 101 may provide the user 105 with an image in which the external objects 514 and 515 and the visual objects 150, 151, 152, and 153 formed by light emitted from the display (e.g., the display 440 of FIG. 4) are mixed, using the display area 510. For example, at least one of the visual objects 150, 151, 152, and 153 may be displayed corresponding to the external objects 514, and 515. For example, the wearable device 101 may display the visual object 150 using an application (e.g., the media content application 460 of FIG. 4) based on identifying the external object 514 (e.g., a wall side). The wearable device 101 may display the visual object 150 in a portion of the external object 514. The wearable device 101 may represent a state in which the visual object 150 is attached to the external object 514 based on displaying the visual object 150 in the portion of the external object 514. For example, the visual object 150 anchored to the external object 514 may include text information to be provided to the user 105. As an example, the visual object 150 may be generated based on a memo application.

For example, the wearable device 101 may display the visual object 151 using an application (e.g., the media content application 460 of FIG. 4) based on identifying the external object 515 (e.g., a table). The wearable device 101 may dispose the visual object 151 on the external object 515. The visual object 151 may be generated based on a schedule application for providing a schedule of the user 105. However, it is not limited thereto.

According to an embodiment, the wearable device 101 may display the visual objects 152 and 153 in the display area 510, independently of identifying the external object. For example, the visual object 152 may be used to provide weather information received from an external server using communication circuitry (not illustrated) of the wearable device 101. The visual object 152 may be generated based on execution of a weather application. The wearable device 101 may adjust a position where the visual object 152 is to be displayed in the display area 510.

For example, the visual object 153 may mean an avatar representing another user different from the user 105 of the wearable device 101. The wearable device 101 may transmit at least one message to the other user (or an electronic device of the other user) using the visual object 153. The wearable device 101 may perform communication with the other user using the visual object 153. The visual object 153 may be generated based on a social network service (SNS) application (or a social media application). The wearable device 101 may change a position where the visual object 153 is displayed in the display area 510.

According to an embodiment, the wearable device 101 may receive, from the user 105, an input indicating to enter into a virtual space in the state 500. In response to the input, the wearable device 101 may initiate execution of an application (e.g., the virtual space output application 467 of FIG. 4) providing the virtual space. The wearable device 101 may generate an area (e.g., the area 110 of FIG. 1) in response to the input. For example, in response to the input, the wearable device 101 may set the area based on receiving an input of the user 105 to set the area. The wearable device 101 may generate the area based on a size in response to an input of the user 105 for setting the size of the area. However, it is not limited thereto. The wearable device 101 may display a screen (e.g., the screen 125 of FIG. 1) indicating a portion of the virtual space in the display area of the display based on execution of the virtual space output application 467 of FIG. 4 in the area. The wearable device 101 may display at least one of the visual objects 150, 151, 152, and 153 in a state of displaying the screen. Hereinafter, in FIGS. 6A, 6B, 6C, and 6D, an example of an operation in which the wearable device 101 displays the at least one in a state in which the screen is displayed will be described later.

As described above, according to an embodiment, the wearable device 101 may identify the external objects 150 and 151 included in the real space using the camera. The wearable device 101 may display the visual objects 150 and 151 corresponding to the external objects 150 and 151 in the display area 510, using the display. The wearable device 101 may display the visual objects 152 and 153 using the display independently of identifying the external objects 150 and 151. The wearable device 101 may adjust positions of the visual objects 150, 151, 152, and 153. The wearable device 101 may provide an augmented reality service to the user 105 by mixing the external objects and the visual objects and displaying them in the display area 510.

FIGS. 6A, 6B, 6C, and 6D illustrate an example of an operation in which a wearable device according to an embodiment displays a visual object in a second state. A wearable device 101 of FIGS. 6A, 6B, 6C, and 6D may include the wearable device 101 of FIGS. 1 to 5. Referring to FIGS. 6A, 6B, 6C, and 6D, states in which the wearable device 101 displays screens 610, 620, 630, and 640 indicating at least a portion of a virtual space are illustrated. The states may be referred to in the state 120 of FIG. 1.

Referring to FIG. 6A, according to an embodiment, the wearable device 101 may display the screen 610 in a display area 510 of a display based on execution of the virtual space output application 467 of FIG. 4. The screen 610 may indicate at least a portion of the virtual space. The wearable device 101 may provide a user 105 with a virtual reality service based on displaying the screen 610.

According to an embodiment, the wearable device 101 may display visual objects 150 and 151 so as to overlap on a portion of the screen 610. The visual objects 150 and 151 may be included in the area 110 of FIG. 1. For example, external objects (e.g., the external objects 514 and 515 in FIG. 5) corresponding to the visual objects 150 and 151 may be included in the area 110. The wearable device 101 may display the visual objects 150 and 151 so as to overlap on the screen 610 based on identifying the visual objects 150 and 151 which are spaced apart below a threshold distance from the wearable device. Positions of the visual objects 150 and 151 in the screen 610 may be referred to as a position where the wearable device 101 displays the visual objects 150 and 151 in correspondence with the external objects 514 and 515, in the state 500 of FIG. 5. However, it is not limited thereto. The wearable device 101 may change the positions of the visual objects 150 and 151 in the screen 610. For example, in the wearable device 101, a position where the wearable device 101 displays the visual objects 150 and 151 in the state 500 of FIG. 5, and a position where the visual objects 150 and 151 are displayed so as to overlap on the screen 610 of FIG. 6A may be different.

For example, although not illustrated, the wearable device 101 may display other visual objects corresponding to each of the visual objects 150 and 151 based on the positions of the visual objects 150 and 151, based on displaying the visual objects 150, 151. As an example, the other visual objects may be used to represent shadows of the visual objects 150 and 151. While displaying the visual objects 150 and 151, the wearable device 101 may display other visual objects representing the shadows of the visual objects 150 and 151. However, it is not limited thereto.

Referring to FIG. 6B, according to an embodiment, the wearable device 101 may display a screen 620 indicating at least a portion of the virtual space in the display area 510 by controlling the display. The screen 620 may be an example of the screen 610.

According to an embodiment, the wearable device 101 may display visual objects 150, 151, and 625 so as to overlap on the screen 610. The wearable device 101 may identify a theme (e.g., a theme representing a camping site) of the virtual space based on execution of the virtual space output application 467. The theme may mean a data set generated by coupling a background, a text size, a text type, an image, a color, and/or layout information based on one type to represent an appearance of the virtual space. The theme may be generated based on an appearance of a real space. The wearable device 101 may provide a user 105 with a virtual reality service, such as being positioned in the real space by displaying a theme-based virtual space.

For example, the visual object 625 may be a virtual object generated based on the theme. The wearable device 101 may display the visual object 625 in the virtual space based on identifying an external object (e.g., the external object 515 of FIG. 5) corresponding to the visual object 151. A position where the visual object 625 is displayed in the display area 510 may be similar to a position where the external object is displayed in the state 500 of FIG. 5. The wearable device 101 may display the visual object 151 on the visual object 625 by displaying the visual object 625 corresponding to the external object. However, it is not limited thereto. As an example, the wearable device 101 may change shapes of the visual objects 150 and 151 based on the positions of the visual objects 150 and 151 and/or a theme of the virtual space. The wearable device 101 may display the visual objects 150 and 151 suitable for the positions and/or the theme on the display area 510 of the display by changing the shapes of the visual objects 150 and 151. However, it is not limited thereto.

For example, although not illustrated, the wearable device 101 may generate virtual objects based on shapes (e.g., a wall side, and/or a table) of external objects based on identifying the external objects (e.g., the external objects 514 and 515 of FIG. 5) using a camera. As an example, the wearable device 101 may set the shapes of the external objects based on a theme of a virtual space. The wearable device 101 may overlappingly display the virtual objects on the screen 620. Positions where the virtual objects are displayed in the display area 510 may be referred to as a position of each of the external objects corresponding to each of the virtual objects in the state 500 of FIG. 5. The wearable device 101 may represent a state in which the visual objects 150 and 151 are anchored to external objects by displaying the virtual objects. For example, in the state 500 of FIG. 5, the wearable device 101 may display the visual objects 150 and 151 using virtual objects corresponding to each of the external objects, such as displaying the visual objects 150 and 151 corresponding to the external objects (e.g., the external objects 514 and 515 of FIG. 5). However, the above-described embodiment is not limited thereto.

Referring to FIG. 6C, according to an embodiment, the wearable device 101 may generate a set of the visual objects 150 and 151 corresponding to external objects (e.g., the external objects 514 and 515 of FIG. 5) included in an area (e.g., the area 110 of FIG. 1). For example, the wearable device 101 may display a visual object 635 in the display area 510 of the display in a state of displaying the screen 630 representing at least a portion of the virtual space.

For example, the visual object 635 may be used to generate the set of the visual objects 150 and 151. The wearable device 101 may display a user interface using the visual object 635 to indicate the set of the visual objects 150 and 151.

For example, the wearable device 101 may dispose the visual objects 150 and 151 included in the area 110 of FIG. 1 on the visual object 635. The wearable device 101 may manage a widget usable in a virtual space by coupling the visual objects 150 and 151 with the visual object 635.

For example, the wearable device 101 may identify a motion of the user to view another portion different from a portion of a virtual space indicated by the screen 630. The wearable device 101 may identify the motion of the user 105 based on head tracking. The wearable device 101 may display another screen indicating the other portion in the display area 510 based on identifying the motion of the user 105. The other screen may represent the other portion of the virtual space. The wearable device 101 may display the visual objects 150, 151, and 635 in the display area 510 so as to overlap on the other screen while displaying the other screen in the display area 510. As an example, the wearable device 101 may change positions of the visual objects 150, 151, and 635 in the virtual space based on the motion of the user 105. The wearable device 101 may provide the user 105 with a widget associated with the visual objects 150 and 151 usable in the virtual space by displaying the visual objects 150, 151, and 635 in the display area 510, independently of identifying the motion of the user 105. However, it is not limited thereto.

Referring to FIG. 6D, according to an embodiment, the wearable device 101 may display the screen 640 indicating a portion of the virtual space in the display area 510 of the display based on execution of the virtual space output application 467 of FIG. 4. The wearable device 101 may identify a theme of the virtual space based on the execution of a virtual space output application 467. For example, the wearable device 101 may display visual objects 150, 151, and 645 so as to overlap on the screen 640. The visual object 645 may be referred to as the visual object 153 of FIG. 1. The visual object 645 may mean one of visual objects disposed other than an area (e.g., the area 110 of FIG. 1). In a state (e.g., the state 120 of FIG. 1) in which the wearable device 101 displays a portion of the virtual space, an operation of displaying one of the visual objects disposed other than the area will be described later in FIG. 8.

According to an embodiment, the wearable device 101 may change an appearance of a visual object (e.g., the visual object 153 of FIG. 1) based on a theme of the virtual space. The visual object (e.g., the visual object 153 of FIG. 1) with the changed appearance may be referred to as the visual object 645 of FIG. 6D. Although not illustrated, the wearable device 101 may change appearances of the visual objects 150 and 151 based on the theme.

According to an embodiment, the wearable device 101 may change to a different state (e.g., the state 100 of FIG. 1) from a state (e.g., the state 120 of FIG. 1) displaying the virtual space based on identifying movement of the wearable device 101 that moves outside the area 110 in the area 110 of FIG. 1. The wearable device 101 may include a sensor (e.g., the gyro sensor, the gravity sensor, and/or the acceleration sensor described with reference to FIGS. 2A, 2B, 3A or 3B) for identifying movement of the user and/or the movement of the wearable device 101. The wearable device 101 may identify that the wearable device 101 and/or the user are outside the area 100 through the sensor. The wearable device 101 may change to the different state based on identifying the wearable device 101 that is outside the area 100. However, it is not limited thereto.

As described above, according to an embodiment, the wearable device 101 may display the visual objects 150 and 151 corresponding to external objects (e.g., external objects 514 and 515 of FIG. 5) disposed in the real space in the virtual space based on various means. The wearable device 101 may provide information linked to the real space based on displaying the visual objects 150 and 151 in the virtual space. The wearable device 101 may provide the user 105 with a sense of immersion in the virtual space by displaying the visual objects 150 and 151 based on a theme of the virtual space.

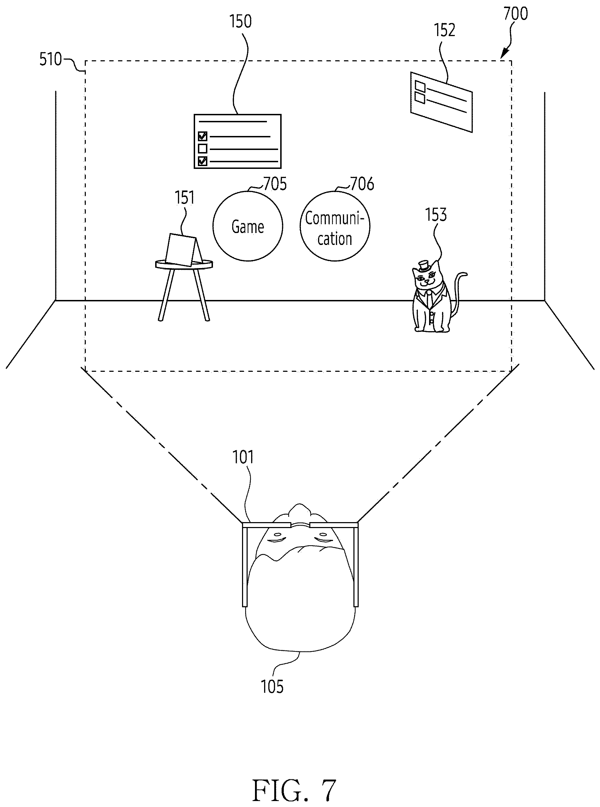

FIG. 7 illustrates an example of an operation based on execution of at least one application of a wearable device according to an embodiment, in a first state. A wearable device 101 of FIG. 7 may include the wearable device 101 of FIGS. 1 to 6D. Referring to FIG. 7, a state 700, in which the wearable device 101 according to an embodiment displays icons 705 and 706 for providing various types of virtual spaces, is illustrated. The state 700 may be an example of the state 500 of FIG. 5.

According to an embodiment, the wearable device 101 may display the icons 705 and 706 in a display area 510 of a display using the display. The wearable device 101 may change positions of the icons 705 and 706 in the display area. The wearable device 101 may display the image in which other visual objects 705 and 706 associated with applications, independent from the external objects, are arranged in the display area 510 of the display.

For example, the icons 705 and 706 may be generated based on a category of applications stored in memory (e.g., the memory 430 of FIG. 4) of the wearable device 101. The wearable device 101 may classify the applications based on the category of the applications. The icons 705 and 706 may be an example of a visual object representing a set of applications classified based on a similar category. The icons 705 and 706 may be generated by the wearable device 101 based on a folder format including the classified applications. The category of applications included in each of the icons 705 and 706 may be different. For example, applications included in the icon 705 may be classified based on a game category. The applications included in the icon 705 may be classified based on a communication category. However, it is not limited thereto. The category may include a financial category, a shopping category, a photo category, an entertainment category, and/or a media content category. The category may include a service provided by the wearable device 101 based on a type of an application. For example, the icons 705 and 706 may be independent from the external objects and may be associated with applications.

According to an embodiment, the wearable device 101 may obtain the icons 705 and 706 based on execution of an application (e.g., the home application 465 of FIG. 4) corresponding to each of the icons 705 and 706. The wearable device 101 may provide the user 105 with a virtual space service based on a category corresponding to the icons 705 and 706 using each of the icons 705 and 706. For example, the wearable device 101 may display at least a portion of a virtual space for providing a communication service in the display area 510 of the display in response to an input indicating that icon 706 is selected. A state in which at least a portion of the virtual space is displayed in the display area 510 of the display may be referred to as the state 120 of FIG. 1. For example, the wearable device 101 may identify an application for providing the communication service. The wearable device 101 may identify a visual object 153 based on the identified application. The wearable device 101 may display the visual object 153 associated with the icon 706 in a virtual space provided using the icon 706 by controlling the display. An operation in which the wearable device 101 displays the visual object 153 in the virtual space for providing the communication service will be described later in FIG. 8. For example, the wearable device 101 may set an area (e.g., the area 110 of FIG. 1) for displaying at least a portion of the virtual space in response to the input indicating that the icon 706 is selected. The wearable device 101 may initiate execution of a home application (e.g., the home application 465 of FIG. 4) corresponding to the icon 706 in the area. The wearable device 101 may provide the user 105 with a virtual reality based on a category corresponding to the icon 706 based on the execution of the home application.

As described above, according to an embodiment, the wearable device 101 may display the icons 705 and 706 in the display area 510, using the display, in a state (e.g., the state 100 of FIG. 1) of identifying a real space in which the wearable device 101 is disposed through a camera. The wearable device 101 may manage applications classified based on a category of applications using the icons 705 and 706. The wearable device 101 may enhance user convenience by managing applications based on one category using the icons 705 and 706.

FIG. 8 illustrates an example of an operation in which a wearable device according to an embodiment, in a second state, displays a visual object based on a category of the visual object. A wearable device 101 of FIG. 8 may include the wearable device 101 of FIGS. 1 to 7. Referring to FIG. 8, in response to the input indicating that the icon 706 of FIG. 7 is selected, a state 800 for providing a virtual reality corresponding to the icon 706 is illustrated. The state 800 may be an example of the state 120 of FIG. 1.

Referring to FIG. 8, according to an embodiment, the wearable device 101 may display a visual object 150 included in an area (e.g., the area 100 of FIG. 1) so as to overlap on a screen 810 in the state 800. Although a state in which the wearable device 101 displays the visual object 150 is illustrated, according to an embodiment, the wearable device 101 may further display the visual object 151 of FIG. 6A so as to overlap on the screen 810.

According to an embodiment, the wearable device 101 may display an applications set 820 based on a category associated with the icon 706 in response to the input indicating that the icon 706 of FIG. 7 is selected. The wearable device 101 may use a user interface (UI) to display the applications set 820. The wearable device 101 may set transparency of the UI based on an alpha value.

According to an embodiment, the wearable device 101 may identify a category of the applications set 820. The applications set 820 may be a portion of applications classified based on a similar category. For example, the wearable device 101 may display a visual object 153, which is not included in an area (e.g., the area 100 of FIG. 1) for maintaining the state 800, so as to overlap on the screen 810, in a display area 510 of a display. The wearable device 101 may display the visual object 153 based on the category of the applications set 820. The visual object 153 may be an example of visual objects corresponding to each of external objects based on identifying the external objects which are spaced apart greater than or equal to a threshold distance from the wearable device 101 in the state 100 of FIG. 1.

For example, the wearable device 101 may identify a category of an application corresponding to the visual object 153. The wearable device 101 may identify the category of the application associated with a virtual reality service provided in the state 800. As an example, the application corresponding to the visual object 153 may be included in the applications set 820. The virtual reality service may include a communication service for communicating with an electronic device of another user different from a user 105.

Although not illustrated, according to an embodiment, the wearable device 101 may display the applications set 820 based on one or more application categories in the display area 510 of the display. The wearable device 101 may identify one or more applications classified based on one category greater than or equal to the threshold number (e.g., 50% of the number of applications included in an applications set) from among the applications set 820. The wearable device 101 may display, in the display area 510 of the display, at least one visual object corresponding to the category of the one or more applications, so as to overlap on the screen 810, from among the visual objects included in an area different from the area 100 of FIG. 1. The one category may mean a communication category. The at least one visual object may include the visual object 153.

According to an embodiment, the wearable device 101 may set a visual object to be displayed so as to overlap on the screen 810 among the visual objects 150, 151, 152, and 153 of FIG. 1. For example, the wearable device 101 may display the visual object so as to overlap on the screen 810 in response to an input of a user 105 indicating to set the visual object to be displayed so as to overlap on the screen 810. The wearable device 101 may display a list including the visual objects 150, 151, 152, and 153 of FIG. 1 for receiving the input of the user 105 in the display area 510 of the display. However, it is not limited thereto.

As described above, according to an embodiment, the wearable device 101 may overlappingly display the visual object 150 included in the area (e.g., the area 100 of FIG. 1) for maintaining the state 800 on the screen 810. The wearable device 101 may overlappingly display the visual object 153, which is included in another area different from the area, on the screen 810, independently of displaying the visual object 150. The wearable device 101 may provide a user with a virtual reality service in a state in which a home application corresponding to an icon (e.g., the icon 706 of FIG. 7) is executed. The wearable device 101 may enhance user convenience by displaying a widget associated with the virtual reality service on the screen 810, independently of a position where the widget (e.g., the visual object 153) is displayed in a state (e.g., the state 100 of FIG. 1).

FIG. 9 illustrates an exemplary flowchart illustrating an operation of a wearable device according to an embodiment. At least one of operations of FIG. 9 may be performed by the wearable device 101 of FIG. 4 and/or the processor 410 of FIG. 4. Each of the operations of FIG. 9 may be performed sequentially, but is not necessarily performed sequentially. For example, an order of each of the operations may be changed, and at least two operations may be performed in parallel.

Referring to FIG. 9, in an operation 910, according to an embodiment, a wearable device may overlappingly display, on the image, visual objects corresponding to external objects included in an image in a first state of displaying the image of a camera. The first state may be referred to as a state 100 of FIG. 1. The first state may mean a state based on an augmented reality service provided by the wearable device to a user.

For example, the wearable device may obtain the image indicating a real space using a camera (e.g., the camera 430 of FIG. 4). The wearable device may identify external objects (e.g., the external objects 514 and 515 of FIG. 5) using the image. The wearable device may display visual objects (e.g., the visual objects 150 and 151 of FIG. 1) linked to the external objects using a display (e.g., the display 440 of FIG. 4). The wearable device 101 may display the visual objects 152 and 153 of FIG. 1 in a display area (e.g., the display area 510 of FIG. 5) of the display independently of displaying the visual objects linked to the external objects.

Referring to FIG. 9, in an operation 920, according to an embodiment, the wearable device may check whether an input for changing from the first state to a second state providing a virtual reality has been identified. For example, the second state may be referred to as the state 120 of FIG. 1. The second state may mean a state based on a virtual reality service provided by the wearable device to the user. The wearable device may initiate execution of an application (e.g., the virtual space output application 467 of FIG. 4) for providing the virtual reality based on identifying the input for changing to the second state. In case that the wearable device does not identify the input for changing to the second state (the operation 920-NO), the wearable device may perform the operation 910.

Referring to FIG. 9, in case that the input for changing to the second state is identified (the operation 920-YES), in an operation 930, the wearable device may set an area for maintaining the second state. The wearable device may receive a user input for setting an area (e.g., the area 110 of FIG. 1). The wearable device may obtain the area for maintaining the second state using a threshold distance. In case that the wearable device is positioned in the area, the wearable device may provide the user with the virtual reality service. In case that the wearable device is positioned other than the area, the wearable device may provide the user with an augmented reality service.

Referring to FIG. 9, in an operation 940, according to an embodiment, the wearable device may display at least a portion of a virtual space. The wearable device may display a screen (e.g., the screen 610 of FIG. 6A) representing at least a portion of the virtual space in the display area (e.g., the display area 510 of FIG. 5) by controlling the display.

Referring to FIG. 9, in an operation 950, according to an embodiment, the wearable device may check whether a first external object which is spaced apart below a threshold distance from the wearable device from among the external objects has been identified. The first external object which is spaced apart below the threshold distance may include at least one of the external objects 514 and 515 of FIG. 5.

Referring to FIG. 9, in case that the first external which is spaced apart below a threshold distance is identified (the operation 950-YES), in an operation 960, according to an embodiment, the wearable device may maintain display of a first visual object corresponding to the first external object from among the visual objects. The first visual object corresponding to the first external object may include at least one of the visual objects 150 and 151 of FIG. 5. A state in which the wearable device displays the first visual object may be referred to as at least one of the states of FIGS. 6A, 6B, 6C, and 6D.

Referring to FIG. 9, in case that the first external object which is spaced apart below the threshold distance is not identified (the operation 950-NO), in an operation 970, according to an embodiment, the wearable device may temporarily refrain from display of second visual objects from among the visual objects. The wearable device may identify the second visual objects which are spaced apart greater than or equal to the threshold distance. The second visual objects may include at least one of the visual objects 152 and 153 of FIG. 1. The wearable device may classify the second visual objects based on a category of a virtual reality service based on the second state and/or a category of applications provided in the second state. The second visual objects may be classified based on a category of applications corresponding to the second visual objects.

Referring to FIG. 9, in an operation 980, according to an embodiment, the wearable device may display at least one classified based on the category associated with the second state from among the second visual objects. At least one of the classified second visual objects may include the visual object 153 of FIG. 8. At least one of the classified second visual objects may be classified based on the category associated with the virtual reality service provided in the second state.

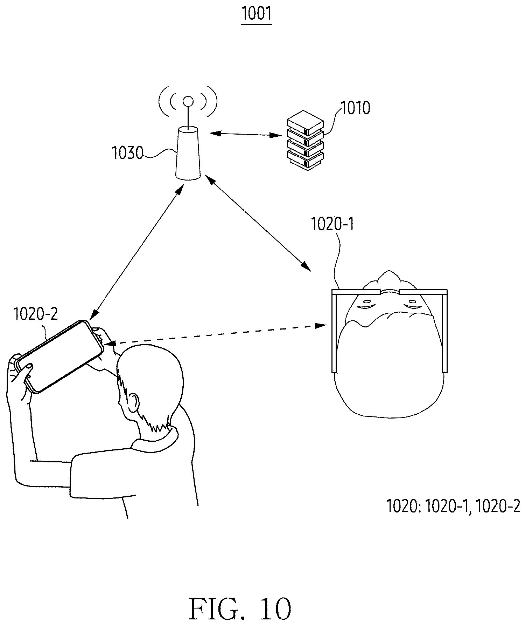

FIG. 10 is an exemplary diagram for a network environment in which a metaverse service is provided through a server. Metaverse is a compound word of the English words "Meta" meaning "virtual" and "transcendence" and "Universe" meaning cosmos, and refers to a three-dimensional virtual world in which social, economic, and cultural activities take place like a real world. Metaverse is a concept that has evolved one step further than a virtual reality (VR, cutting-edge technology that enables people to experience real-life experiences in a virtual world created by a computer), and it is characterized by using avatars to not only enjoy games or virtual reality, but also social and cultural activities like a reality. A metaverse service may provide media content for enhancing immersion in the virtual world, based on an augmented reality (AR), a virtual reality environment (VR), a mixed environment (MR), and/or an extended reality (XR).

For example, media content provided by the metaverse service may include social interaction content including avatar-based game, concert, party, and/or meeting. For example, the media content may include information for economic activities such as advertising, user created content, and/or sales and/or shopping of productions. Ownership of the user created content may be proved by a blockchain-based non-fungible token (NFT). The metaverse service may support economic activities based on real money and/or cryptocurrency. By the metaverse service, virtual content associated with the real world, such as digital twin or life logging, may be provided.

FIG. 10 is an exemplary diagram of a network environment 1001 in which a metaverse service is provided through a server 1010.

Referring to FIG. 10, a network environment 1001 may include a server 1010, a user terminal 1020 (e.g., a first terminal 1020-1 and a second terminal 1020-2), and a network connecting the server 1010 and the user terminal 1020. In the network environment 1001, the server 1010 may provide a metaverse service to the user terminal 1020. The network may be formed by at least one intermediate node 1030 including an access point (AP) and/or a base station. The user terminal 1020 may access the server 1020 through the network and output a user interface (UI) associated with a metaverse service to a user of the user terminal 1020. Based on the UI, the user terminal 1020 may obtain information to be inputted into the metaverse service from the user, or output information (e.g., multimedia content) associated with the metaverse service to the user.

In this case, the server 1010 provides a virtual space so that the user terminal 1020 may perform activities in the virtual space. In addition, the user terminal 1020 may represent information provided by the server 1010 to the user by installing an S/W agent to access the virtual space provided by the server 1010, or transmit information that the user wants to represent in the virtual space to the server. The S/W agent may be provided directly through the server 1010, downloaded from a public server, or embedded and provided when purchasing a terminal.

In an embodiment, the metaverse service may provide a service to the user terminal 1020 and/or a user by using the server 1010. The embodiment is not limited thereto, and the metaverse service may be provided through individual contacts between users. For example, in the network environment 1001, the metaverse service may be provided by a direct connection between the first terminal 1020-1 and the second terminal 1020-2, independently of the server 1010. Referring to FIG. 10, in the network environment 1001, the first terminal 1020-1 and the second terminal 1020-2 may be connected to each other through a network formed by at least one intermediate node 1030. In an embodiment in which the first terminal 1020-1 and the second terminal 1020-2 are directly connected, any one of the first terminal 1020-1 and the second terminal 1020-2 may perform a role of the server 1010. For example, a metaverse environment may be configured only with a device-to-device connection (e.g., a peer-to-peer (P2P) connection).

In an embodiment, the user terminal 1020 (or the user terminal 1020 including the first terminal 1020-1 and the second terminal 1020-2) may be made in various form factors, and it is characterized by including an output device for providing an image and/or sound to the user and an input device for inputting information into the metaverse service. An exemplary user terminal 1020 in various form factors may include a smartphone (e.g., the second terminal 1020-2), an AR device (e.g., the first terminal 1020-1), a VR device, an MR device, a Video See Through (VST) device, an Optical See Through (OST) device, a smart lens, a smart mirror, a TV capable of inputting and outputting, or a projector.

A network (e.g., a network formed by at least one intermediate node 1030) includes all of various broadband networks including 3G, 4G, and 5G and short-range networks (e.g., a wired network or a wireless network that directly connects the first terminal 1020-1 and the second terminal 1020-2) including Wi-Fi and BT.

According to an embodiment, a wearable device may display a widget corresponding to applications using a display in a state of providing an augmented reality service. A method for displaying the widget may be required in a state in which the wearable device provides a virtual reality service.

As described above, according to an embodiment, the wearable device 101 may comprise a camera 430, a display 440, and a processor 410. The processor may display, in a first state 100, 500, or 700 for displaying an image of the camera, visual objects 150, 151, 152, and 153 corresponding to external objects 514, and 515 included in the image on the display so as to overlap on the image. The processor may display at least a portion of a virtual space on the display in response to an input for changing from the first state to a second state 120 providing a virtual reality. The processor may maintain display of a first visual object 150 or 151 corresponding to a first external object from among the visual objects, based on identifying the first external object 514 or 515 which is spaced apart below a threshold distance from the wearable device from among the external objects in the second state.

As described above, according to an embodiment, a wearable device 101 may comprise a camera 430, a display 440, memory storing instructions, and a processor 410. The instructions, when executed by the processor, may cause the wearable device to, in a first state 100, 500, or 700 for displaying an image of the camera, identify types and positions of external objects 514, and 515 included in the image. The instructions, when executed by the processor, may cause the wearable device to, in the first state 100, 500, or 700 for displaying the image of the camera, display, on the display, an image in which visual objects 150, 151, 152, and 153 set to the types are arranged with respect to the external objects. The instructions, when executed by the processor, may cause the wearable device to, in the first state 100, 500, or 700 for displaying the image of the camera, display, identify an input for changing to a second state 120 for providing a visual reality. The instructions, when executed by the processor, may cause the wearable device to, in the second state for displaying, on the display, at least a portion of a virtual space, changed from the first state in response to the input, maintain display of a first visual object 150 or 151 corresponding to a first external object form among the visual objects, based on identifying the first external object 514 and 515 which is spaced apart below a threshold distance from the wearable device from among the external objects.

The instructions, when executed by the processor, may cause the wearable device to, in the second state, identify second visual objects corresponding to each of second external objects, based on identifying the second external objects which are spaced apart greater than or equal to the threshold distance from the wearable device from among the external objects. The instructions, when executed by the processor, may cause the wearable device to, in the second state, temporarily refrain from display of the second visual objects 152, and 153.

The instructions, when executed by the processor, may cause the wearable device to, in the first state, display, on the display, the image in which other visual objects 705 and 706 associated with applications and independent from the external objects are arranged. The instructions, when executed by the processor, may cause the wearable device to, in the first state, change to the second state for displaying the at least one second visual object 153 associated with the application corresponding to another visual object selected in response to an input indicating that the another visual object is selected from among the other visual objects 705 and 706.

The camera may comprise one or more cameras. At least one camera from among the one or more cameras may be a depth camera. The instructions, when executed by the processor, may cause the wearable device to identify, using the camera being a depth camera, distances between the wearable device and the external objects.

The wearable device may further comprise an inertia measurement sensor. The instructions, when executed by the processor, may cause the wearable device to identify, through the inertia measurement sensor, movement of the wearable device. The instructions, when executed by the processor, may cause the wearable device to change to the first state, based on identifying that the wearable device is outside the area based on the movement.

The first state may be a state for providing an augmented reality (AR) service. The second state may be a state for providing a virtual reality service. The external objects may indicate objects in a real space, identified through the camera. The visual objects may be user interfaces which are displayable through the display and exist in the virtual space other than the real space.

For example, the processor may, in the second state, temporarily refrain from display of the second visual objects 152 and 153 different from the first visual object from among the visual objects.

For example, the processor may, in the second state, identify the second visual objects corresponding to each of the second external objects, based on identifying the second external objects which are spaced apart greater than or equal to the threshold distance from the wearable device from among the external objects. The processor may display at least one second visual object 153 classified based on a category associated with the second state from among the second visual objects.

For example, the processor may change to the second state, in response to an input indicating that a third visual object 705 or 706 including the second visual objects is selected.

For example, the camera may comprise one or more cameras. At least one camera from among the one or more cameras may be a depth camera. The processor may identify, using the camera being a depth camera, distances between the wearable device and the external objects.

For example, the processor may display, on the display, the first visual object in the second state at a second position different from a first position where the first visual object is displayed in the first state.

For example, the processor may set an area 110 for maintaining the second state, in response to the input for changing to the second state.

For example, the processor may change to the first state, based on identifying the wearable device that is outside the area.

As described above, according to an embodiment, in a method of a wearable device 101, the method may comprise, in a first state 100, 500, and 700 for displaying an image of a camera 430, visual objects 150, 151, 152, and 153 corresponding to external objects 514, and 515 included in the image, displaying, on the display 440, so as to overlap on the image. The method may comprise displaying at least a portion of a virtual space on the display in response to an input for changing from the first state to a second state 120 providing a virtual reality. The method may comprise maintaining display of a first visual object 150 or 151 corresponding to a first external object from among the visual objects, based on identifying the first external object 514 or 515 which is spaced apart below a threshold distance from the wearable device from among the external objects in the second state.

As described above, according to an embodiment, a method of a wearable device 101 may comprise, in a first state 100, 500, or 700 for displaying an image of a camera 430, identifying types and positions of external objects 514 and 515 included in the image. The method may comprise displaying, on a display 440, an image in which visual objects 150, 151, 152, and 153 set to the types are arranged with respect to the external objects. The method may comprise identifying an input for changing to a second state 120 for providing a visual reality. The method may comprise, in the second state for displaying, on the display, at least a portion of a virtual space, changed from the first state in response to the input, maintaining display of a first visual object 150 or 151 corresponding to a first external object from among the visual objects, based on identifying the first external object 514 or 515 which is spaced apart below a threshold distance from the wearable device from among the external objects.

The method may comprise, in the second state, identifying second visual objects corresponding to each of second external objects, based on identifying the second external objects which are spaced apart greater than or equal to the threshold distance from the wearable device from among the external objects. The method may comprise temporarily refraining from display of the second visual objects 152 and 153.

The method may comprise, in the first state, displaying, on the display, the image in which other visual objects 705 and 706 associated with an application and independent from the external objects are arranged. The method may comprise changing to the second state for displaying the at least one second visual object 153 associated with the application corresponding to another visual object selected in response to an input indicating that the another visual object is selected from among the other visual objects 705 and 706.

For example, the maintaining display of the first visual object may comprise temporarily refraining from display of the second visual objects 152 and 153 different from the first visual object from among the visual objects in the second state.

For example, the temporarily refraining from display of the second visual objects may comprise identifying the second visual objects corresponding to each of the second external objects, based on identifying the second external objects which are spaced apart greater than or equal to the threshold distance from the wearable device from among the external objects. The temporarily refraining from display of the second visual objects may comprise displaying at least one 153 classified based on a category associated with the second state from among the second visual objects.

For example, the displaying at least the portion of the virtual space may comprise changing to the second state, in response to an input indicating that a third visual object 705 or 706 including the second visual objects is selected.

For example, the maintaining display of the first visual object may comprise identifying, using the camera being a depth camera, distances between the wearable device and the external objects.

For example, the maintaining display of the first visual object may comprise displaying, on the display, the first visual object in the second state at a second position different from a first position where the first visual object is displayed in the first state.

For example, the displaying at least the portion of the virtual space may comprise setting an area 110 for maintaining the second state, in response to the input for changing to the second state.

For example, setting the threshold distance may comprise changing to the first state, based on identifying the wearable device that is outside the area.

As described above, according to an embodiment, in a computer-readable storage medium storing one or more programs, the one or more programs, when executed by a processor 410 of a wearable device 101, may display visual objects 150, 151, 152, and 153 linked to external objects 514, and 515 included in the image on a display 440 so as to overlap on the image. The one or more programs, when executed by the processor of the wearable device, may display at least a portion of a virtual space on the display in response to an input for changing from the first state to a second state 120 providing a virtual reality. The one or more programs, when executed by the processor of the wearable device, may maintain display of a first visual object 150 or 151 from corresponding to a first external object form among the visual objects, based on identifying the first external object 514 or 515 which is spaced apart below a threshold distance from the wearable device from among the external objects in the second state.

As described above, according to an embodiment, in a computer readable storage medium storing one or more programs, the one or more programs, when executed by a processor 410 of a wearable device 101, may cause the wearable device to, in a first state 100, 500, or 700 for displaying an image of a camera 430, identify types and positions of external objects 514 and 515 included in the image. The one or more programs, when executed by the processor 410 of the wearable device 101, may cause the wearable device to display, on a display 440, an image in which visual objects 150, 151, 152, and 153 set to the types are arranged with respect to the external obj ects. The one or more programs, when executed by a processor 410 of the wearable device 101, may cause the wearable device to identify an input for changing to a second state 120 for providing a visual reality. The one or more programs, when executed by the processor 410 of the wearable device 101, may cause the wearable device to, in the second state for displaying, on the display, at least a portion of a virtual space, changed from the first state in response to the input, maintain display of a first visual object 150 and 151 corresponding to a first external object from among the visual objects, based on identifying the first external object 514 and 515 which is spaced apart below a threshold distance from the wearable device from among the external objects in the second state.

For example, the one or more programs, when executed by the processor of the wearable device, may temporarily refrain from display of the second visual objects 152 and 153 different from the first visual object from among the visual objects.

For example, the one or more programs, when executed by the processor of the wearable device 101, may identify the second visual objects corresponding to each of the second external objects, based on identifying the second external object which are spaced apart greater than or equal to the threshold distance from the wearable device from among the external objects. The one or more programs, when executed by the processor of the wearable device, may display at least one 153 classified based on a category associated with the second state from among the second visual objects.

For example, the one or more programs, when executed by the processor of the wearable device, may change to the second state in response to an input indicating that a third visual object 705 or 706 including the second visual objects is selected.

For example, the one or more programs, when executed by the processor of the wearable device, may identify, using the camera being a depth camera, distances between the wearable device and the external objects.

For example, the one or more programs, when executed by the processor of the wearable device, may display, on the display, the first visual object in the second state at a second position different from a first position where the first visual object is displayed in the first state.

For example, the one or more programs, when executed by the processor of the wearable device, may set an area for maintaining the second state, in response to the input for changing to the second state.

For example, the one or more programs, when executed by the processor of the wearable device, may change to the first state, based on identifying the wearable device that is outside the area.

The device described above may be implemented as a hardware component, a software component, and/or a combination of a hardware component and a software component. For example, the devices and components described in the embodiments may be implemented by using one or more general purpose computers or special purpose computers, such as a processor, controller, arithmetic logic unit (ALU), digital signal processor, microcomputer, field programmable gate array (FPGA), programmable logic unit (PLU), microprocessor, or any other device capable of executing and responding to instructions. The processing device may perform an operating system (OS) and one or more software applications executed on the operating system. In addition, the processing device may access, store, manipulate, process, and generate data in response to the execution of the software. For convenience of understanding, there is a case that one processing device is described as being used, but a person who has ordinary knowledge in the relevant technical field may see that the processing device may include a plurality of processing elements and/or a plurality of types of processing elements. For example, the processing device may include a plurality of processors or one processor and one controller. In addition, another processing configuration, such as a parallel processor, is also possible.

The software may include a computer program, code, instruction, or a combination of one or more thereof, and may configure the processing device to operate as desired or may command the processing device independently or collectively. The software and/or data may be embodied in any type of machine, component, physical device, computer storage medium, or device, to be interpreted by the processing device or to provide commands or data to the processing device. The software may be distributed on network-connected computer systems and stored or executed in a distributed manner. The software and data may be stored in one or more computer-readable recording medium.

The method according to the embodiment may be implemented in the form of a program command that may be performed through various computer means and recorded on a computer-readable medium. In this case, the medium may continuously store a program executable by the computer or may temporarily store the program for execution or download. In addition, the medium may be various recording means or storage means in the form of a single or a combination of several hardware, but is not limited to a medium directly connected to a certain computer system, and may exist distributed on the network. Examples of media may include a magnetic medium such as a hard disk, floppy disk, and magnetic tape, optical recording medium such as a CD-ROM and DVD, magneto-optical medium, such as a floptical disk, and those configured to store program instructions, including ROM, RAM, flash memory, and the like. In addition, examples of other media may include recording media or storage media managed by app stores that distribute applications, sites that supply or distribute various software, servers, and the like.

As described above, although the embodiments have been described with limited examples and drawings, a person who has ordinary knowledge in the relevant technical field is capable of various modifications and transform from the above description. For example, even if the described technologies are performed in a different order from the described method, and/or the components of the described system, structure, device, circuit, and the like are coupled or combined in a different form from the described method, or replaced or substituted by other components or equivalents, appropriate a result may be achieved.

Therefore, other implementations, other embodiments, and those equivalent to the scope of the claims are in the scope of the claims described later.

## Claims

1. A wearable device comprising:
a camera;
a display;
memory storing instructions, and
a processor,
wherein the instructions, when executed by the processor, cause the wearable device to:
in a first state for displaying an image of the camera:
identify types and positions of external objects included in the image,
display, on the display, an image in which visual objects set to the types are arranged with respect to the external objects,
identify an input for changing to a second state for providing a visual reality,
in the second state for displaying, on the display, at least a portion of a virtual space, changed from the first state in response to the input:
maintain display of a first visual object corresponding to a first external object from among the visual objects, based on identifying the first external object which is spaced apart below a threshold distance from the wearable device from among the external objects.

2. The wearable device of claim 1,
wherein the instructions, when executed by the processor, cause the wearable device to:
in the second state:
identify second visual objects corresponding to each of second external objects, based on identifying the second external objects which are spaced apart greater than or equal to the threshold distance from the wearable device from among the external objects, and
temporarily refrain from display of the second visual objects.

3. The wearable device of claim 1,
wherein the instructions, when executed by the processor, cause the wearable device to:
in the second state:
identify the second visual objects corresponding to each of second external objects, based on identifying the second external objects which are spaced apart greater than or equal to the threshold distance from the wearable device from among the external objects, and
display at least one second visual object classified based on a category associated with the second state from among the second visual objects.

4. The wearable device of claim 3,
wherein the instructions, when executed by the processor, cause the wearable device to:
in the first state:
display, on the display, the image in which other visual objects associated with applications and independent from the external objects are arranged,
change to the second state for displaying the at least one second visual object associated with the application corresponding to another visual object selected in response to an input indicating that the another visual object is selected from among the other visual objects.

5. The wearable device of claim 1,
wherein the camera comprises one or more cameras,
wherein at least one camera from among the one or more cameras is a depth camera, and
wherein the instructions, when executed by the processor, cause the wearable device to:
identify, using the camera being a depth camera, distances between the wearable device and the external objects.

6. The wearable device of claim 1,
wherein the instructions, when executed by the processor, cause the wearable device to:
display, on the display, the first visual object in the second state at a second position different from a first position where the first visual object is displayed in the first state.

7. The wearable device of claim 1,
wherein the instructions, when executed by the processor, cause the wearable device to:
set an area for maintaining the second state, in response to the input for changing to the second state.

8. The wearable device of claim 7, further comprising an inertia measurement sensor, wherein the instructions, when executed by the processor, cause the wearable device to:
identify, through the inertia measurement sensor, movement of the wearable device, and
change to the first state, based on identifying that the wearable device is outside the area based on the movement.

9. The wearable device of claim 1,
wherein the first state is a state for providing an augmented reality service,
wherein the second state is a state for providing a virtual reality service,
wherein the external objects indicate objects in a real space, identified through the camera, and
wherein the visual objects are user interfaces which are displayable through the display and exist in the virtual space other than the real space.

10. A method of a wearable device, the method comprising:
in a first state for displaying an image of a camera:
identifying types and positions of external objects included in the image, displaying, on a display, an image in which visual objects set to the types are arranged with respect to the external objects,
identifying an input for changing to a second state for providing a visual reality, and
in the second state for displaying, on the display, at least a portion of a virtual space, changed from the first state in response to the input:
maintaining display of a first visual object corresponding to a first external object from among the visual objects, based on identifying the first external object which is spaced apart below a threshold distance from the wearable device from among the external objects.

11. The method of claim 10, comprising:
in the second state:
identifying second visual objects corresponding to each of second external objects, based on identifying the second external objects which are spaced apart greater than or equal to the threshold distance from the wearable device from among the external objects, and
temporarily refraining from display of the second visual objects.

12. The method of claim 10, comprising:
in the second state:
identifying the second visual objects corresponding to each of the second external objects, based on identifying the second external objects which are spaced apart greater than or equal to the threshold distance from the wearable device from among the external objects, and
displaying at least one second visual object classified based on a category associated with the second state from among the second visual objects.

13. The method of claim 12,
wherein displaying at least the portion of the virtual space comprises:
in the first state:
displaying, on the display, the image in which other visual objects associated with an application and independent from the external objects are arranged,
changing to the second state for displaying the at least one second visual object associated with the application corresponding to another visual object selected in response to an input indicating that the another visual object is selected from among the other visual objects.

14. The method of claim 10,
wherein maintaining display of the first visual object comprises:
displaying, on the display, the first visual object in the second state at a second position different from a first position where the first visual object is displayed in the first state.

15. A computer readable storage medium storing one or more programs,
wherein the one or more programs, when executed by a processor of a wearable device, cause the wearable device to:
in a first state for displaying an image of a camera:
identify types and positions of external objects included in the image,
display, on a display, an image in which visual objects set to the types are arranged with respect to the external objects,
identify an input for changing to a second state for providing a visual reality,
in the second state for displaying, on the display, at least a portion of a virtual space, changed from the first state in response to the input:
maintain display of a first visual object corresponding to a first external object from among the visual objects, based on identifying the first external object which is spaced apart below a threshold distance from the wearable device from among the external objects in the second state.
